(19) Europäisches Patentamt
European Patent Office
Office européen des brevets

(11) EP 1 775 591 A1

(12) **EUROPEAN PATENT APPLICATION**
published in accordance with Art. 158(3) EPC

(43) Date of publication:
**18.04.2007 Bulletin 2007/16**

(21) Application number: **05760127.0**

(22) Date of filing: **14.07.2005**

(51) Int Cl.:
***G01N 35/08*** *(2006.01)* ***G01N 37/00*** *(2006.01)*

(86) International application number:
**PCT/JP2005/013078**

(87) International publication number:
**WO 2006/006679 (19.01.2006 Gazette 2006/03)**

(84) Designated Contracting States:
**DE FR GB**

(30) Priority: **14.07.2004 JP 2004207647**
**19.10.2004 JP 2004303706**

(71) Applicant: **EBARA CORPORATION**
**Ohta-ku,**
**Tokyo 144-8510 (JP)**

(72) Inventors:
- **HIRATA, Kazuya**
**Fujisawa-shi, Kanagawa 2518502 (JP)**
- **SHINODA, Masao**
**Fujisawa-shi, Kanagawa 2518502 (JP)**
- **NOHMI, Motohiko**
**Fujisawa-shi, Kanagawa 2518502 (JP)**
- **GOTO, Akira**
**Fujisawa-shi, Kanagawa 2518502 (JP)**
- **TAKEDA, Kazuyoshi**
**Fujisawa-shi, Kanagawa 2518502 (JP)**

(74) Representative: **Emde, Eric**
**Wagner & Geyer,**
**Gewürzmühlstrasse 5**
**80538 München (DE)**

# (54) MICROCHANNEL CHIP REACTION CONTROL SYSTEM, MICRO TOTAL REACTION SYSTEM INCLUDING THE CONTROL SYSTEM, AND MICRO TOTAL ANALYSIS SYSTEM

(57) A microchannel chip reaction control system of the present invention is **characterized by** being provided with a microchannel chip 1 having at least two microfluidic channels 1a and 1b for introducing reagent solutions A and B and a microfluidic reaction channel 1c formed by joining the two microfluidic channels 1a and 1b to each other, analysis means 2 for analyzing a product C obtained from the microfluidic reaction channel 1c, and control means 3 for controlling conditions for the reaction in the microchannel chip 1 on the basis of analysis results obtained from the analysis means 2.

[Figure 2]

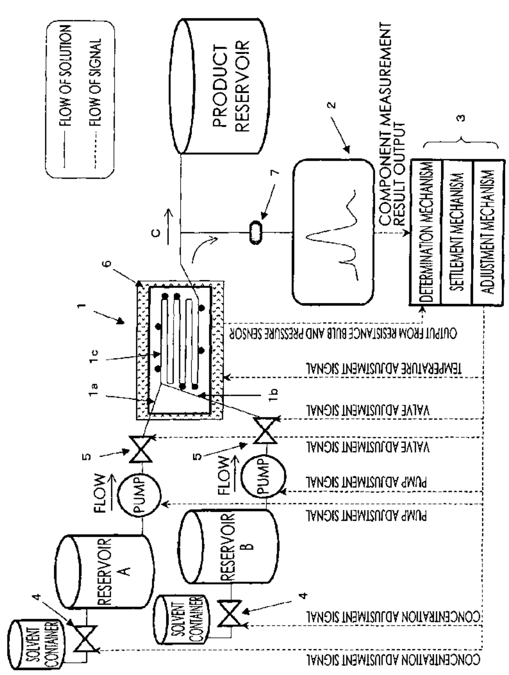


EP 1 775 591 A1

## Description

### TECHNICAL FIELD

The present invention relates to a microchannel chip reaction control system capable of controlling predetermined reaction conditions such as a reagent flow rate, concentration and/or reaction temperature in a microchannel chip which has at least two microfluidic channels for introducing reagent solutions and a microfluidic channel formed by joining the two microfluidic channels to each other, and which is for causing synthesis reaction between reagent solutions merging with each other in the microfluidic channel or reaction between a reagents and a test object for a testing purpose.
The present invention also relates to a microchannel chip reaction control system capable of suitably controlling a temperature condition.

### BACKGROUND ART

In recent years, microchannel chips in which various micro-chemical reactions while flowing reagent solutions by using fluid channels having a minuscule channel sectional area (microfluidic channels) have attracted attention. Such microchannel chips have advantages described below. For example, because the fluid channel sectional area is minuscule, a reagent solution and a test object in a small volume may suffice and the specific surface area of the flow in each channel (the surface area per unit volume) is also large. Therefore, the heat exchange efficiency is extremely high and temperature control can be easily performed rapidly. Consequently, high selectivity can be ensured with respect to stereochemistry, geometrical isomerism and positional isomerism of a reaction product and reaction can be effected with efficiency. In many cases, therefore, microchannel chips are used for synthesis reaction for producing a predetermined substance (microreaction system) or for reaction between a reagent solution and a test object for a testing purpose (micro total analysis system, μTAS).
In ordinary chemical reactions, a suitable temperature condition exists with respect to each reaction. This is due to the fact that the thermal kinetic energy of particles in a solution becomes higher with the increase in temperature in a chemical reaction. For the occurrence of a chemical reaction, smashing particles such as atoms, molecules or ions on each other to cause recombination of atoms between particles is required. Recombination of atoms between particles does not necessarily occur among all of particles that have smashed on each other. As shown in Figure 1, an activated complex in a high-energy unstable state is temporarily produced among particles having energy higher than a certain level, called activation energy, and only the particles forming the activated complex change into a product. In Figure 1, the ordinate represents energy and the abscissa represents the direction of progress of reaction. A case where the energy of a product is lower than a reacting substance is exothermic reaction, and the reverse case is an endothermic reaction. The case shown in Figure 1 is exothermic reaction. In a chemical reaction, therefore, the reaction rate tends to increase when the temperature is increased. This tendency is also shown clearly by the Arrhenius equation shown as equation (1) below.
$$k = A \exp\left(-\frac{E_a}{RT}\right) \quad \cdots \text{(Equation 1)}$$

(where A is a frequency factor and $E_a$ is activation energy. These terms are constants specific to the reaction. Also, R is the gas constant and T is the absolute temperature. Further, k is called a rate constant. The larger the constant k, the higher the reaction rate.)
In a reaction at an extremely high temperature, however, an undesirable phenomenon, e.g., a phenomenon in which a reagent before reaction is chemically decomposed occurs. Thus, a suitable temperature condition exists with respect to each chemical reaction, and temperature management in a reaction region is very important. If temperature management for a chemical reaction is not sufficiently performed, the chemical reaction is not performed in accordance with the program and degradation necessarily occurs in productivity of the reaction system, such that the amount of yield of the main target product decreases. In a chemical reaction using a flask, a beaker or a large reaction bath as in the past, however, it is extremely difficult to perform temperature adjustment rapidly and uniformly through the entire reaction region for causing the chemical reaction by using a certain amount of a reagent solution. In contrast, in the case of a chemical reaction in a microchannel chip, the mass of a reagent solution in the reaction region is extremely small, so that a temperature setting can be made rapidly and uniformly. Therefore a temperature condition suitable for the chemical reaction can be obtained.
Also, in a chemical reaction even in the case of mixing for the purpose of producing a predetermined substance, performing a chemical reaction by setting the concentrations and mix proportions of reagent solutions to the concentrations and mix proportions in the theoretical chemical formula cannot always be said to be preferable in terms of yield amount and selectivity of the product. Also, the progress of a chemical reaction changes subtly depending on various factors, e.g., orientation factors such as the wettability and the contact angle on a wall surface in the reaction region, the viscosity, density and surface tension of a reagent solution and a product, and the surface tension between the wall surface and the solution with respect to a channel, as well as on the influence of the temperature in the reaction region. It is predicted that, in a reaction using a microfluidic channel of a large specific area in a microchannel chip, the influences of such factors including the temperature in the reaction region and the differences between the physical characteristics of a reagent solution and a product vary more remarkably. However, no guidelines for coping with such variation have been studied.

In many cases of chemical reaction, a byproduct and an intermediate substance are produced. In many of such cases, since the byproduct is a solid (crystal), there was a problem that the crystal attached to a channel locally narrows the channel to cause a reduction in flow rate and may cause clogging in the channel if it was left growing. Also, there is a possibility of generation of various gases such as hydrogen and carbon dioxide during chemical reaction. With a chemical reaction in a microchannel chip, there are serious problems, such that a backflow of a reagent solution or a product occurs even when a small amount of gas is generated by the chemical reaction.

There is, therefore, a demand for a technique for determining various parameters with respect to conditions during operation, e.g., the temperature in the reaction region and the concentration and the flow rate of a reagent solution in a chemical reaction using a microchannel chip channel. Further, with respect to operations with equipment, there has been a demand for ensuring the desired amount of yield and selectivity of a product by managing the temperature in the reaction region, and for accurately controlling the flow rate and concentration of a reagent solution in the reaction region to cope with various disturbances.

Japanese Patent Laid-Open No. 2003-43052 (Patent Document 1) for example discloses a method of flow rate control in the above-described microchannel chip. However, this technique is a method of flow rate control in a single channel and cannot be said to be a technique for adjusting the concentrations and mix proportions of two or more reagent solutions, changing the total amount of a product and controlling the flow rate with respect to changes in temperature and pressure. No techniques other than that disclosed in the above patent document are found as a solution to the above-described problem.

In a chemical reaction in a microchannel chip, on the contrary, since the mass of a solution in the reaction region is extremely small, it is theoretically possible to make a temperature setting rapidly and uniformly and to obtain a temperature condition suitable for the chemical reaction. However, no technique has been realized for managing and controlling the extremely small reaction region in a microchannel chip at a temperature suitable for a reaction. Patent Document 1: Japanese Patent Laid-Open No. 2003-43052

DISCLOSURE OF THE INVENTION

PROBLEMS TO BE SOLVED BY THE INVENTION .

So far, there have been problems described above, and therefore with respect to a chemical reaction using a microchannel chip, there has been a need to determine conditions for operations at the time of reaction through vast numbers of preliminary experiments by operating many parameters including the temperature and pressure in the reaction region and the concentrations and mix proportions of reagent solutions to be mixed and by considering the physical properties of the reagent solutions and a product and the size and shape of channel sections. Further, there is a need to promptly cope with precipitation of a crystal and generation of a gas during chemical reaction for example. The prior art has not been adapted as a solution to these problems and there are many challenges to be considered with respect to reaction control in a microchannel chip.

The present invention has been achieved in consideration of the above-described problems, and an object of the present invention is to provide a microchannel chip reaction control system capable of suitably adjusting various conditions relating to a chemical reaction to be effected in a microfluidic channel in a microchannel chip, e.g., a temperature condition in a reaction region and the concentration and the flow rate of a reagent solution without performing vast numbers of preliminary experiments, and also capable of coping with a fault due to a solid precipitated or a gas generated during the chemical reaction.

Another object of the present invention is to provide a microchannel chip reaction control system capable of efficiently generating and producing a target reaction product by accurately controlling the temperature in a microreaction region in particular among conditions relating to a reaction to be targeted.

Still another object of the present invention is to provide a microreaction system capable of efficiently producing a target product or a micro total analysis system capable of obtaining good inspection results by using the above-described microchannel chip reaction control system.

MEANS FOR SOLVING THE PROBLEMS

To achieve the above-described objects, the present invention provides a microchannel chip reaction control system having at least two microfluidic channels for introducing reagent solutions and a microfluidic reaction channel formed by joining at least two microfluidic channels to each other, the system including:

analysis means for analyzing a product produced by reaction between the reagent solutions merging with each other in the microfluidic reaction channel; and
control means for controlling conditions relating to the reaction in the microfluidic reaction channel on the basis of analysis results obtained from the analysis means.

In one form of the microchannel chip reaction control system according to the present invention, the control means is capable of controlling the flow rate, concentration, temperature and/or pressure, preferably temperature in particular, of each of the reagent solution in the microfluidic channel and/or the microfluidic reaction channel.
In one form of the above-described system, the control means is further capable of controlling the flow rate, concentration, temperature and/or pressure of each of the reagent solution in the microfluidic channel and/or the microfluidic reaction channel on the basis of the ambient temperature and/or the ambient pressure around the microchannel chip.
In one form of the above-described system, the analysis means is capable of measuring the proportions of components in the product produced in the microfluidic reaction channel. Also, the analysis means may be capable of measuring the amount of at least one of components in the product produced in the microfluidic reaction channel.
In one form of the above-described system, the control means is capable of controlling the temperature of the microchannel chip and the flow rate and/or concentration of each reagent solution by monitoring at all times or for a certain time period the temperature of the microchannel chip and the proportions or the amounts of components in the product produced in the microfluidic reaction channel and by feeding back the results of monitoring at any time.
In one form of the above-described system, the control means is capable of controlling the temperature of the microchannel chip and the flow rate and/or concentration of each reagent solution by monitoring at all times or for a certain time period the ambient temperature and the ambient pressure around the microchannel chip and the pressure in the microfluidic channel and by feeding back the results of monitoring at any time.
In one form of the system of the invention which is preferred for controlling temperature, a heat-transfer medium channel is provided in parallel with a portion of a predetermined length in the microfluidic reaction channel, and temperature adjustment in a reaction region is performed via a heat-transfer medium delivered into the heat-transfer medium channel.
In one form of the above-described system, the heat-transfer medium channel is formed in a double-pipe structure coaxial with the microfluidic reaction channel. Also, a plurality of the heat-transfer medium channels may be provided along the microfluidic reaction channel.
In one form of the above-described system, a temperature sensor is provided in the microfluidic reaction channel. The temperature sensor may comprise a resistance bulb or a thermocouple.
In one form of the above-described system, the analysis means may comprise a chromatography device.
In one form of the above-described system, the control means is capable of controlling the operation of a heat-transfer medium delivery means for delivering the heat-transfer medium into the heat-transfer medium channel on the basis of outputs from the analysis means and the temperature sensor. The control means may be capable of independently adjusting the temperatures of the plurality of heat-transfer medium channels.
In one form of the system of the invention which is preferred for controlling temperature, a temperature adjustment device is provided which performs temperature adjustment in a reaction region by irradiating the microfluidic reaction channel with laser light.
In one form of the above-described system, a temperature sensor is provided in the microfluidic reaction channel. The temperature sensor may comprise a resistance bulb or a thermocouple.
In one form of the above-described system, the control means performs temperature adjustment in the reaction region by changing the output of the laser light and/or changing the focal distance of the laser light.
In one form of the above-described system, the temperature adjustment device is capable of irradiating a plurality of regions in the microchannel chip with laser light.
The microchannel chip reaction control system according to the present invention may be a system including a combination of any of the above-described arrangements. That is, a combination of any of the arrangement of the analysis means, the objects to be analyzed by the analysis means, the arrangement of the control means, the conditions of the objects to be controlled (kinds of control parameters and kinds of actuators) and the arrangement of the temperature adjustment means (including the number and the kind of the temperature sensors) is within the range of application of the present invention.

The present invention also provides a micro total reaction system including the microchannel chip reaction control system in any of the above-described forms, the micro total reaction system being capable of controlling reaction conditions between raw material components for production of a substance in the microchannel chip.

The present invention further provides a micro total reaction analysis system including the microchannel chip reaction control system in any of the above-described forms, the micro total analysis reaction system being capable of controlling reaction conditions between a reagent compound and a chemical compound to be tested in the microchannel chip.

EFFECT OF THE INVENTION

The microchannel chip reaction control system of the present invention is provided with a microchannel chip having at least two microfluidic channels for introducing reagent solutions and a microfluidic channel formed by joining at least two microfluidic channels to each other, the analysis means for analyzing a product having reacted between the reagent solutions in the joined microfluidic channel, and the control means for controlling conditions relating to the reaction in the microfluidic channel on the basis of analysis results obtained from the analysis means. Therefore the microchannel chip reaction control system can perform suitable control such that the chemical reaction in the microfluidic channel is effected under preferable conditions, without depending on vast numbers of preliminary experiments or empirical rules.

For example, reaction conditions, for example, for a synthesis reaction for the purpose of producing a substance, a reagent reaction for an inspection purpose or the like can be optimized in order on the basis of the results of analysis of the product actually produced, thus being able to set and maintain optimum conditions such that the product is produced so as to have components in the desired proportions and amounts.

In particular, while the microchannel chip is a minuscule-amount reaction system using microfluidic channels and is, therefore, susceptible to small variations in various reaction conditions such as the reagent flow rate and concentration, and the temperature and pressure in the reaction region, it is comparatively easy, because of its minuscule scale, to apply an artificial variation to the reaction conditions. The present invention takes advantage of the characteristics of such a microreaction system and provides a microchannel chip reaction control system to realize efficient production of a substance for example.

With the arrangement provided with a heat-transfer medium channel for temperature control according to the present invention, there are provided a microchannel chip reaction control system in which a temperature-adjusted heat-transfer medium is supplied to the heat-transfer medium channel provided in parallel with a portion of a predetermined length in the reaction channel to perform fine control comprising accurately making temperature adjustment uniform through difference reaction regions or performing adjustment to different temperatures, and which is therefore capable of generating and producing a target product with efficiency, and a microreaction system using the microchannel chip reaction control system.

With arrangement in which the microfluidic reaction channel is irradiated with laser light for temperature control according to the present invention, there are provided a microchannel chip reaction control system in which temperature adjustment in any reaction region is performed by freely selected timing by externally radiating laser light to the reaction channel in the microchannel chip to perform fine control comprising accurately making temperature adjustment uniform through difference reaction regions or performing adjustment to different temperatures, and which is therefore capable of generating and producing a target product with efficiency, and a microreaction system using the microchannel chip reaction control system.

BRIEF DESCRIPTION OF THE DRAWINGS

Figure 1 is a diagram for explaining the principle of reaction in a typical reaction system;
Figure 2 is a diagram schematically showing the construction of a system according to the embodiment;
Figure 3 is a diagram showing virtual data for explaining a method of adjustment with the system according to the embodiment;
Figure 4 is a diagram showing other virtual data for explaining the method of adjustment with the system according to the embodiment;
Figure 5 is a diagram showing a response curve of an evaluation function $Q_X^2$ for polystyrene polymerization according to the embodiment;
Figure 6 is a diagram showing an optimum point search path of $Qx^2$ according to the embodiment;
Figure 7 is a diagram showing a microreaction system according to a first embodiment of the present invention;
Figure 8(a) is a plan view of a microchannel chip in the microreaction system shown in Figure 7, Figure 8(b) is a sectional view taken along line A-A in Figure 8(a), and Figure 8(c) is a sectional view of a modified example taken along line A-A in Figure 8(a);

Figure 9 is a graph showing an example of the results of component measurement when the microreaction system shown in Figure 7 is used;

Figure 10 shows an example of the flow of a heat-transfer medium in the microreaction system shown in Figure 7;

Figure 11 shows another example of the flow of a heat-transfer medium in the microreaction system shown in Figure 7;

Figure 12 is a diagram showing a microreaction system according to a second embodiment of the present invention;

Figure 13 is a diagram showing an example of a laser light radiation method in the microreaction system according to the second embodiment;

Figure 14 is a diagram showing another example of a laser light radiation method in the microreaction system according to the second embodiment;

Figure 15 is a diagram showing a microreaction system according to a third embodiment of the present invention;

Figure 16 is a diagram showing an example of modification of the microreaction system according to the third embodiment of the present invention;

Figure 17 is a graph showing the relationship between a distribution of particle energy in a chemical reaction and the progress of the reaction;

Figure 18 is a diagram showing an example of the results of peptide synthesis reaction using a microreactor;

Figure 19 is diagram for a graphical representation according to a steepest-descent method as a mathematical optimization method;

Figure 20 is a diagram showing an example of a case where an evaluation function has a plurality of peak values; and

Figure 21 is a diagram for a graphical representation of convergence according to an adaptive simulated annealing method as a searching optimization method.

DESCRIPTION OF SYMBOLS

Figures 1 to 6

| | |
|---|---|
| A, B | Reagent solution |
| C | Product |
| 1 | Microchannel chip |
| 1a, 1b | Microfluidic channel for introducing reagent solution |
| 1c | Joined microfluidic channel |
| 2 | Analysis means |
| 3 | Control means |

Figures 7 to 16

| | |
|---|---|
| 10 | Microchannel chip |
| 12A, 12B | Raw-material channel |
| 14 | Mixing/reaction channel |
| 18a, 18b, 18c | Parallel heat-transfer medium channel |
| 18A | Parallel heat-transfer medium channel |
| 20 | Component measurement device |
| 30, 40 | Temperature adjustment mechanism |
| 32 | Heat-transfer medium conduit |
| 34, 34a, 34b, 34c | Heat-transfer medium source |
| 36, 36a, 36b, 36c | Pump |
| 44 | Laser irradiation device |
| 50 | Controller |
| Ts1-Ts9 | Temperature sensor |

BEST MODE FOR CARRYING OUT THE INVENTION

A preferred embodiment of the present invention will be described in detail with reference to the accompanying drawings.

Figure 2 schematically shows an arrangement according to the embodiment of the present invention. It is assumed that in the system according to the embodiment synthesis reaction expressed by a general formula "A + B → C" where A and B denote reagent solutions and C denotes a main product is to be performed.

This system is provided with a microchannel chip 1 having two microfluidic channels 1a and 1b for introducing reagent solutions A and B respectively and a microfluidic reaction channel 1c which is formed by joining the microfluidic channels 1a and 1b, and in which a chemical reaction occurs between reagent compounds as a result of merging of the reagent solutions A and B, a component measurement device 2 (analysis means) for sampling and analyzing a product C flowing out of the microfluidic reaction channel 1c, and a control means 3 for adjusting conditions relating to the chemical reaction in the microfluidic reaction channel 1c on the basis of component measurement results (analysis results) outputted from the component analysis device 2.

On the upstream side of the two microfluidic channels 1a and 1b are connected reservoirs A and B in which the reagent solutions A and B to be supplied to the microchannel chip 1 are reservoired, solvent containers from which solvents are supplied to the reservoirs, concentration adjusting valves 4 which change the rates of inflows from the solvent containers to adjust the concentrations of reagents in the reservoirs, pumps for supplying the reagent solutions from the reservoirs to the microchannel chip 1, and flow rate adjusting valves 5 for adjusting the flow rates of the reagent solutions A and B. These pumps and valves are controllably connected to the control means 3. Thus, an adjustment mechanism capable of independently controlling the reagent concentrations in the reservoirs and the drive pressures and the rates of flows of the reagent solutions A and B into the microfluidic channels 1a and 1b by adjustment signals issued from the control means 3 is formed.

In the microchannel chip 1, temperature sensors (e.g., resistance bulbs or thermocouples) and pressure sensors are provided in a plurality of places in the wall surface of the microfluidic reaction channel 1c (solid round marks in the figure indicate the places in which the sensors are provided, by way of example). The microchannel chip 1 is placed on an electric heater 6. The electric heater 6 is feedback-controllable by a temperature adjustment signal issued from the control means 3 according to a measured value of the temperature detected by the temperature sensor and a set temperature target value. Thus, a temperature adjustment mechanism for adjusting the temperature in the microfluidic reaction channel 1c to a temperature suitable for the reaction to be effected is formed. A temperature sensor and an atmospheric pressure sensor for detecting the temperature and pressure in the atmosphere surrounding the microchannel chip 1, which sensors are not shown in the figure, may be further provided to construct a system resistant to disturbances and may be connected to the above-described temperature adjustment mechanism.

The product flow C produced in the microfluidic reaction channel 1c is supplied to the product reservoir. However, part of it is sampled by being taken in the component measurement device 2 preferably via a deaerator 7. The component measurement device 2, for example, is a chromatography device (typically HPLC) which analyzes reaction conditions in the reaction system including the proportions and amounts of components in the sampled product. The deaerator 7 may be a device for deaerating the product to be analyzed by a means using ultrasonic generation or helium for example. Component analysis results (for example, the waveform chart in the figure) obtained in the component measurement device 2 are taken in a determination mechanism of the control means 3 and are, if necessary, stored in a storage means not shown in the figure.

The control means 3 has the determination mechanism for determining analysis results with respect to the sampled product, a settlement mechanism for settling adjustment conditions with respect to the adjustment mechanism on the above-described portions of the system according to an instruction from the determination mechanism, and an adjustment mechanism for adjusting the operating conditions of the pumps and the valve openings according to an instruction from the settlement mechanism. One personal computer may perform the functions of these mechanisms. The control means 3 can perform all control/adjustment operations according to a stored computer program.

The control means 3 performs automatic adjustment for adjusting any parameters to target values as required. For example, in the settlement mechanism, analysis results actually obtained in the component measurement device 2 are compared with theoretical values (target values) with respect to the desired analysis result (e.g., an optimum amount of production or optimum component proportions), and computation is performed to obtain adjustment amounts, more specifically amounts of adjustment of the concentrations of the reagent solutions (the openings of the valves 4), the flow rates (the rotational speeds of the pumps and/or the openings of the valves 5) and the reaction temperature (the applied current to the electric heater 6) for example, such that the results of analysis of the product are brought closer to the theoretical values by minimize the differences therebetween. The adjustment mechanism issues electrical signals to the adjustment mechanisms according to the designated adjustment parameters and adjustment amounts.

Feedback control through the electric heater 6 and the pumps may be performed so that the temperature in the reaction region and the in-channel pressure become closer to the target values, by monitoring for a certain time period or at all times the detection values obtained from the temperature sensors and the pressure sensors. In addition to this, control enabling prediction of an influence a disturbance on the system or immediate action against a disturbance may be performed by monitoring for a certain time period or at all times disturbance data obtained from the temperature and atmospheric pressure sensors for detecting the ambient temperature and pressure. Further, a warning means, not shown in the figure, may be operated when an abnormal value is detected from the temperature sensors or the pressure sensors.

A "microfluidic channel" is a channel having a minuscule channel sectional area for flowing a reagent solution. The reaction control system in accordance with the present invention is made effective in control of reaction between minuscule amounts of liquid treated under a micro-scale. From this viewpoint, the term "microfluidic channel" used in this specification denotes a channel having such small reaction space that strict control of reaction between minuscule amounts of solutions is effective. A microfluidic channel is formed by using a fine patterning technique such as a photolithography technique and has a width and a height of, for example, about 10 to 100 $\mu$m.

The term "reagent solution" used in this specification denotes, in microfluidic channel, a solution containing a reactive component for causing a target chemical reaction, typically a row material compound for synthetic reaction, a reagent compound for inspection reaction, or a solution containing as a solute a compound to be inspected or the like. A solvent for the reagent solution may be selected by considering, for example, compatibility with the reactive component to be used or suitable viscosity. The reactive component and the solvent used in the present invention are not limited to particular kinds.

"Conditions relating to reaction in the microfluidic channel" include the flow rate of a reagent solution in the microfluidic channel, the concentration of the reagent, the temperature, the pressure, the ambient temperature and the ambient pressure. One of the most influential conditions in reaction control in this system is the temperature. Strictly speaking, it is the temperature of the reagent solution. The temperature of the reagent solution is assumed to be the temperature of the wall surface of the microfluidic reaction channel contacting the reagent solution and the vicinity of the wall surface. In the microchannel chip, an extremely small amount of a reagent solution is treated. Therefore, the response of temperature control of the reagent solution through changes in temperature in the vicinity of the microfluidic reaction channel is high and the influence of a change in temperature on the target reaction is large.

As a method of driving reagent solutions, a pump drive method may be used as in this embodiment. However, a method using the capillary phenomenon and electroosmosis current may alternatively be used.

The microchannel chip used in this invention can be manufactured by an ordinary method in the corresponding technical field. Typical manufacturing method is as follow. Ordinarily, the microchannel chip is constituted by two substrates. Grooves for the microchannel are formed in one surface of one of the two substrates according to a predetermined design by using a photolithography technique. Reservoir holes are formed in the other substrate by machining such as ultrasonic machining to provide reagent solution supply holes and reagent solution discharge holes. These two substrates are joined to each other by using a bonding technique such as hot-melt joining to obtain a microchannel chip having microfluidic channels having predetermined lengths and sectional areas. A material suitable for the substrates may be selected from glass, quartz, plastics, silicon resin and other materials.

Next, a method of adjustment with this system will be described with reference to virtual data shown in Figures 3 and 4.

Results shown in Figure 3 are first assumed as analysis results obtained at a certain point in time by the component measurement device during operation of this system. The ordinate of Figure 3 represents the amount of a component and the abscissa represents retention time. Each peak is shown as a function of the amount of elution of a particular component and the elution time. In a case where a chromatography device is used as the component measurement device, standardization such as obtaining a calibration curve is performed in advance to enable conversion of the amounts of components of the product with respect to analysis results.

Measurements of the proportions and amounts of components of the product with the component measurement device may be monitored at all times during reaction, and the activation and shutdown of the system for certain time periods may be performed to obtain results of analysis of them.

It is assumed here that from the results shown in Figure 3 the determination mechanism determines "a plan to increase the production of the main product C because the amount of the main product C produced is small under the present operating conditions". In response to the determination by the determination mechanism, the settlement mechanism reexamines the parameters in the sections of the system, evaluates and selects the parameters to be adjusted for an increase in the production of the main product C and determines the amounts of adjustment of the parameters. Concrete examples of the parameters are the temperature in the reaction region in the microchannel chip, more particularly the temperature in the vicinity of the microfluidic reaction channel 1c and the concentrations and the flow rates of the reagent solutions A and B. The evaluation and selection of the parameters to be adjusted and determination of the amounts of adjustment in the determination mechanism may be made by using a database in which data is empirically accumulated with respect to the correlation between the amounts of change in the parameters, and automatic optimization may be tried with the determination mechanism and the settlement mechanism with respect to measurement results successively obtained. Needless to say, concurrent use of the database and automatic optimization is possible. Automatic optimization described above is a technique for determining the amounts of adjustment by evaluating and selecting parameters which need adjustment to correct the amount of production of the main product C on the basis of the tendency of change in a function for design evaluation of factors including the amount of production of the main product C due to variation in the group of control parameters. A computation algorithm for automatic optimization is generally called an optimization algorithm. A concrete example of an adjustment method for increasing the amount of production of the main product C is, for example, i) trying increasing the temperature in the reaction region in the microchannel chip in a case where a tendency of the amount of production of the main product C to increase is obtained when the temperature in the reaction region in the microchannel chip is increased, or ii) trying adjustment of the flow rates and concentrations of the reagent solutions A and B in a case where no tendency of the amount of production of the main product C to increase is exhibited when the temperature is increased.

Temperature adjustment can be performed by using an electric heater and a chiller for example, as described above. Also, the flow rates of the reagent solutions A and B can be changed by changing the rotational speeds of the pumps and adjusting the valve openings. The concentrations of the reagent solutions A and B can be adjusted, for example, by dilution with the solvent and by thickening using heating in reservoir.

The temperature in the reaction region in the microchannel chip is set to the optimum condition for chemical reaction by automatically repeating the above-described measurement, determination, settlement and adjustment in a sequence at suitable times by means of an optimization algorithm for a personal computer or the like, thereby enabling the reagent solutions A and B to be supplied to the microchannel chip at the optimum flow rates and concentrations. This system does not require vast numbers of preliminary experiments for determining operating conditions.

Description will be made by using virtual data shown in Figure 4. It is intuitively conjectured that the flow rate and concentration of the reagent solution A are large. In some cases of chemical reaction, even when results such as shown in Figure 4 are given, the amount of production of the main product C is much increased when the flow rate and concentration of the reagent solution A are increased. Because such a case is conceivable, conventional preliminary experiments in chemical reaction require enormous time and effort for determination of parameters during operation. In this system, a microchannel chip in which reaction progresses comparatively fast is used and conditions for operation therein can be automatically determined. Therefore, adjustment to conditions for optimization of the amount of production of the product C can be rapidly performed with reliability; time and effort for preliminary experiments are reduced; and a stabilized amount of yield of the product can be ensured during operation.

In a chemical reaction, there is a possibility of precipitation of a crystal as a byproduct or generation of a gas or the like. If a crystal precipitates to attach to the channel, a flow rate reduction problem, a channel clogging problem or the like arises. In this system, however, the proportions and/or amounts of components of the product are measured, as described above. To cope with the decrease of the product C, adjusting mechanism can correspond so as to increase the flow rates by determining and settling the increase of the reagent solutions A and B. Clogging or the like against the flow also appears as an abrupt reduction in the flow rate. Therefore the system manager can recognize such clogging and immediately take measures against it. Also against the generation of a gas, in this system, taking measures such as preventing backflow by increasing the delivery pressures of the pumps or dissolving the generated gas by mixing in a large amount of solvent is enabled by monitoring the pressure in the microchannel chip at all times with the pressure sensors or the like.

Further, with respect to the influence of disturbances such as a change in temperature or a change in atmospheric pressure around the system, the proportions and/or amounts of components of the product are measured to enable the mechanisms for determination, settlement and adjustment to be suitably controlled and to thereby enable suitable control and management of the temperature in the microchannel chip and the flow rates and concentrations of the reagent solutions A and B including coping with the influence of disturbances, thus ensuring production of the main product C with stability.

As described above, this system is capable of automatically performing control of the temperature in the reaction region, adjustment of the flow rates of reagent solutions and adjustment of the concentrations of the reagent solutions on the basis of the results of analysis of the sampled product and, therefore, enables the product to be produced with stability and efficiency or enables reagent reaction for inspection to be performed with stability and efficiency, and is also capable of coping with faults such as clogging and backflow in the microchannel chip.

As already described, the response of control on the temperature in a microchannel chip is high and the temperature is a limiting condition influential on a target reaction. It is, therefore, important to provide a microchannel chip reaction control system capable of temperature control with high accuracy.

An embodiment of a microchannel chip reaction control system suitable for control of the temperature in a microfluidic reaction channel will be described below.

Figure 7 schematically shows microproduction system or a micro total analysis system suitable for temperature control according to the preferred embodiment of the present invention. In this system, a main product C in the form of a solution is also produced according to a reaction formula $A + B \rightarrow C$ from raw-material reagent solutions containing predetermined amounts of A and B. This system is provided with a microchannel chip 10 which provides a reaction space for causing reaction between A and B by mixing A and B, a temperature adjustment mechanism 30 for adjusting the temperature in the reaction region in the microchannel chip 10, and a controller 50 which adjusts the operation of the temperature adjustment mechanism 30 on the basis of the results of measurements with various sensors provided in and downstream of the microchannel chip 10.

In the microchannel chip 10, as shown in Figure 8, fine channels or reaction spaces are constructed by forming grooves on surfaces of a plurality of (two in the figure) planer substrates 11a and 11b so that the grooves are confluent with each other. In this embodiment, raw-material channels 12A and 12B (i.e., microfluidic channels for introducing reagent solutions) are formed so as to be opened in one corner portion of a rectangular chip. These channels are confluent at a confluent portion 13 having the shape of Y and form, downstream of this portion, an elongated meandering mixing/reaction channel 14 (i.e., microfluidic reaction channel) and communicates with an external channel 16 at an exit port 15 open in a corner portion at the opposite side. Parallel heat-transfer medium channels 18a, 18b, and 18c for temperature adjustment, to which a heat-transfer medium is supplied from the temperature adjustment mechanism 30, are provided along the mixing/reaction channel 14, as shown in Figure 8(b) or 8(c). The parallel heat-transfer medium channels 18a, 18b, and 18c are formed so as to have a predetermined length in parallel the mixing/reaction channel 14 to heighten the efficiency of heat exchange between the thermal-transfer medium and the solution in the mixing/reaction channel 14, thereby ensuring the sufficient temperature control. While in this example the heat-transfer medium channels are provided separately from each other in three places along the mixing/reaction channel 14 of microchannel chip 10, the numbers and placement of the heat-transfer medium channels can be freely set.

Temperature sensors Ts1 to Ts9, e.g., resistance bulbs or thermocouples for separately measuring the temperature in the mixing/reaction channel 14 in one or more places are provided in predetermined places in the microchannel chip 10. A component measurement device 20 such as a chromatography device is provided on the external channel 16 downstream of the mixing/reaction channel 14. Outputs from these sensors are inputted to the controller 50.

The temperature adjustment mechanism 30 has a heat-transfer medium conduit 32 which communicates with the parallel heat-transfer medium channels 18a, 18b, and 18c through a communication channel 19, a heat-transfer medium source 34 of a predetermined temperature provided at an intermediate position in the heat-transfer medium conduit 32, and a pump 36 which delivers the heat-transfer medium with a pressure. The heat-transfer medium source 34 is, for example, a fluid container with a heat source for temperature adjustment. The temperature adjustment mechanism 30 is capable of cooling as well as heating by setting a heat-transfer medium temperature. In the embodiment shown in Figure 8(b), the heat-transfer medium channel is formed so as to surround the mixing/reaction channel 14. In the embodiment shown in Figure 8(c), two parallel heat-transfer medium channels 18A, 18A are formed on opposite sides of the mixing/reaction channel 14. However, they may alternatively be formed adjacent to the mixing/reaction channel 14 on one side.

The controller 50 has a determination section 52 which determines the state of the system from the results of measurement of temperature by the temperature sensors Ts1 to Ts9 and the results of measurement of components of the reaction product made by the component measurement device 20, a settlement section 54 which settles instructions to the temperature adjustment mechanisms 30 and 40 on the basis of instructions from the determination section 52, and an adjustment section 56 which outputs signals for adjusting the temperature adjustment mechanisms 30 and 40 according to instructions from the settlement section 54. The determination section 52, the settlement section 54 and the adjustment section 56 may be provided as separate computer chips or one personal computer may operate as these sections.

An example of a process when this system is operated will be described below to concretely explain the advantages of the above-described microreaction system (or micro total analysis system). Figure 9 is a graph showing a typical pattern of data obtained as a result of reaction A + B → C for which the system according to this embodiment is used. The ordinate represents the amount of a component and the abscissa represents retention time. In a case where a chromatography device is used as the component measurement device 20, there is a need to perform standardization such as obtaining a calibration curve in advance and to make conversion of the amounts of components of the product with respect to analysis results.

It is assumed here that from the results shown in Figure 9 the determination section 52 determines "a plan to increase the production of the main product C because the amount of the main product C produced is small under the present operating conditions". The temperature in the reaction region dominantly determines the reaction rate in chemical reaction, as described above. Therefore it can be predicted that the production of the main product C can be increased if the temperature rise in the reaction region is promoted. The settlement section 54 settles an increase in temperature in the reaction region according to the result from the determination section 52.

The settlement section 54 settles the amount of adjustment with respect to the temperature adjustment mechanism 30 in the reaction region according to the determination made by the determination section 52. The control method may be an open control method of settling by using an empirical database of which the amount of adjustment has been prepared in advance or a method in which adjustment is automatically performed by the determination section 52 and the settlement section 54 so that the results of measurement by the component measurement device 20 become equal to target values. Needless to say, the control method may alternatively be a method using both the open control method and the automatic adjustment method.

Automatic adjustment comprises temperature adjustment in a certain reaction region and determination of an amount of further adjustment on the basis of the change in the amount of production of the main product C as a result of the temperature adjustment. More specifically, feedback control is performed on the basis of a control operation formula theoretically or empirically obtained as a description of a reaction process. The control operation formula reflects, for example, the principle of "(8) trying increasing the temperature in the reaction region in the microchannel chip in a case where a tendency of the amount of production of the main product C to increase is obtained when the temperature in the reaction region in the microchannel chip 10 is increased", and the principle of "(b) trying cooling the reaction region in a case where the chemical reaction is exothermic reaction and, therefore, the risk of temperature runaway arises". Thus, measurement → determination → settlement → adjustment is automatically repeated on the basis of measurement results from the temperature sensors Ts1 to Ts9 provided in the microchannel chip 10 and the component measurement device 20 to enable the temperature in the reaction region in the microchannel chip 10 to be set to an optimum condition for the chemical reaction, thus making it possible to form a safe system having high productivity and being able to avoid temperature runaway or the like.

Trial calculations for showing the advantages of use of the microchannel chip of the present invention over the conventional art are made below. As conditions for trial calculations, the specific heat of a reagent solution used in a chemical reaction in the microchannel chip is assumed to be 4.2 [kJ/kg·K], the specific gravity of the reagent solution 1000 [kg/m$^3$], the sectional configuration of the chemical reaction portion in the microchannel chip 100 [μm] × 40 [μm], and the flow rate of the reagent solution in the reaction portion 0.001 [m/s]. A case is assumed where a need arises to increase the temperature in the reaction region by 20 [K] for the purpose of accelerating the chemical reaction during the operation of the microreactor under these conditions. As the amount of heat Q to be applied to the reagent in the reaction region to meet this need by using the temperature adjustment mechanism 30 provided for the microchannel chip according to the present invention can be achieved with an extremely small amount of heat as shown below:

$$Q = 1000 \times 100 \times 40 \times 10^{-12} \times 0.001 \times 4.2 \times 20 = 3.36 \times 10^{-7}\ [\mathrm{kW}]\ \ldots\ (\text{Equation 2})$$

From this, it is inferred that use of the extremely simple temperature adjustment mechanism 30 and 40 may suffice. Since the specific surface area of the reaction portion of the microreactor is large, it is easily to uniformly maintain the temperature of the reaction region when an amount of heat is externally applied.

For comparison, a trial calculation of time t taken to increase the temperature of the reagent solution by 20 [K] by applying an amount of heat of 3.36 × 10$^{-7}$ [kW] to 100 × 10$^{-6}$ [m$^3$] of the reagent in a conventional flask or beaker is made. The specific heat and specific gravity of the reagent are the same as those in the above-described trial calculation with respect to the microreactor. This time t is

$$t = \frac{1000 \times 100 \times 10^{-6} \times 4.2 \times 20}{3.36 \times 10^{-7}} = 2.5 \times 10^{7}[\mathrm{S}] = 2.9 \times 10^{2}[\mathrm{Day}] \cdots (\text{Equation 3})$$

This shows the impossibility of forming a practical system. Thus, a high-output high-priced temperature adjustment mechanism is required in the case of temperature adjustment in a chemical reaction in a conventional flask or beaker.

In the conventional system using a flask or a beaker, it is extremely difficult to obtain a temperature distribution uniform in the reagent because the specific surface area is smaller than that in the microreactor. In a case where the temperature in the reagent is locally low in such a situation, the reaction does not progress sufficiently. Also, if the temperature in the reagent is excessively increased locally, there is a risk of occurrence of an undesirable phenomenon, e.g., decomposition of a reacting substance in the reagent.

A method of temperature adjustment by means of the temperature adjustment mechanism 30 in this embodiment will be described in detail. The temperature adjustment mechanism 30 tries adjusting the temperature of the solution in the reaction region by causing water or silicon oil for example at a suitable temperature to flow as a heat-transfer medium. In an example described below, warm water is used for the purpose of increasing the reaction rate. In an event of temperature runaway or the like, cool water is used to try cooling the reaction region.

Parallel heat-transfer medium channels 18a, 18b, and 18c such as shown in Figures 8(b) and 8(b) are used and a trial calculation of the lengths of the parallel heat-transfer medium channels 18a, 18b, and 18c necessary for temperature control is made. If the amount of heat q transferable per unit length of the parallel heat-transfer medium channels 18a, 18b, and 18c is 0.1 [kW/m], the length L of the parallel heat-transfer medium channels 18a, 18b, and 18c necessary for increasing the temperature of the fluid having the above-described physical properties by 20 [K] under the same conditions is

$$L = \frac{Q}{q} = \frac{3.36 \times 10^{-7}}{0.1} = 3.36 \times 10^{-6}[m] = 3.36[\mu m] \cdots \text{(Equation 4)}$$

From this, it can be predicted that temperature control can be performed by using parallel heat-transfer medium channels 18a, 18b, and 18c of a minuscule length. This trial calculation has been made on various assumptions. It is thought to be necessary to design the parallel heat-transfer medium channels 18a, 18b, and 18c necessary for temperature control according to the material of the chip and the experimental conditions.

While no concrete line of parallel heat-transfer medium channels 18a, 18b, and 18c in the microchannel chip 10 has been described, a simple one having a series connection to the pump 36 such as shown in Figure 10, and one in which the parallel heat-transfer medium channels 18a, 18b, and 18c are provided with different pumps 36a, 36b, and 36c and heat-transfer medium sources 34a, 34b, and 34c to be independently temperature-adjustable, as shown in Figure 11, are conceivable. In Figure 11, return channels are omitted. In this example, both the temperature and flow rate of the thermal-transfer medium are variable and, therefore, fine temperature adjustment can be performed. If one of them is provided, independent adjustment is possible. Flow rate adjustment valves may be alternatively provided with sharing a pump 36.

Figure 12 shows another embodiment of the present invention. The components other than the temperature adjustment mechanism are the same as those in the above-described embodiment. In this embodiment, the temperature adjustment mechanism 40 is an optical heating apparatus which radiates light from a light source outside the microchannel chip 10. This apparatus has two laser radiation devices 44 provided at such positions as to face the surface of the microchannel chip 10, supporting/drive mechanisms 46 which support this laser radiation device 44 and change the positions and orientations thereof, and radiation control means (not shown in the figure) for adjusting, for example, the intensities, sectional shapes and focuses of beams. If laser light is used in this way, the small region in the microchannel chip 10 can be strongly irradiated and local temperature control, for example, on a particular portion of the channel can be performed.

In the laser radiation devices 44, temperature adjustment may be performed by changing the laser light output or by changing the focal distance of laser light. Pin-point heating can be performed by focusing a beam on one place, as shown in Figure 13. Heating can also be performed by irradiating a region in strip form with a beam along the mixing/reaction channel 14, as shown in Figure 14. Needless to say, any region can be selectively heated as required by selecting the shape and size of the beam cross section. The region to be heated can be easily changed by operating the supporting/drive mechanism 46 so that the beam is directed to the necessary place. Further, the supporting/drive mechanism 46 can be operated so that the beam is moved through a predetermined region in a reciprocating manner. Thus, the laser radiation device 44 externally radiates coherent light and therefore has the advantage of easily changing the portion to be heated.

Next, the function of the temperature adjustment mechanism 40 using this laser light will be described. Trial calculation is made under the same conditions as the above-described trial calculations with respect to the case of temperature control using laser as shown in Figure 13 or 14. If 80% of the laser output is absorbed for increasing the reagent temperature, the necessary laser output P is

$$P = Q \times 0.8 = 3.36 \times 10^{-7} \times 0.8 = 2.79 \times 10^{-7}\ [kW] = 2.79 \times 10^{-1}\ [mW] \ldots \text{(Equation 5)}$$

The laser output of a laser oscillator comparatively safe for the human body, e.g., one used in a laser displacement sensor is about 3 [mW]. Therefore, if the temperature control method according to the present invention is used, a safe temperature control system can be constructed without using a large-output laser (the output of carbon-dioxide lasers used for laser machining or the like is 35 [W] or higher). This trial calculation has been made on various assumptions. It is thought to be necessary to set the laser output necessary for temperature control according to the material of the chip and the experimental conditions.

The temperature adjustment mechanism 30 using a heat-transfer medium and the temperature adjustment mechanism 40 using laser light may be used in combination, as shown in Figure 15. For example, the former predominates in use, while more local adjustment is performed with the latter, thus enabling more accurate adjustment. Also, a technique to progress chemical reaction becomes feasible while various temperature conditions is set with respect to the flow of the solution in the microchannel chip 10.

Further, temperature adjustment by irradiating the heat-transfer medium with laser light as shown in Figure 16 may be performed in some cases where temperature control by directly irradiating the reagent with laser light is undesirable for reasons relating to the specific heat, heat conductivity, or any other physical property value of the reagent or the heat-transfer medium used for the chemical reaction to be effected, constraints on the apparatus, or the like.

The present invention will be described more concretely with reference to examples thereof. The following description of the examples illustrates the implementability of the present invention and is not to be interpreted as limiting of the scope of the invention described in the claims.

Examples

An example in which noncatalytic thermally-initiated polymerization of styrene is performed in a microreactor will be described as an example of automatic optimization of a chemical reaction to which the present invention is applied. Styrene is polymerized to form polystyrene by heating. Conventionally, in designing a reactor for effecting this reaction, a preliminary test using small-sealed-tube polymerization is performed and a model formula for the reaction rate is determined from the test to compute design parameters of the reactor. Table 1 shows an example of the results of a test using sealed-tube polymerization of styrene having a purity of 100%.

[Table 1]

| Results of styrene sealed-tube polymerization experiment | | | | | |
|---|---|---|---|---|---|
| 120°C | | 140°C | | 160°C | |
| Time hr | Conversion rate | Time hr | Conversion rate | Time hr | Conversion rate |
| 0 | 0 | 0 | 0 | 0 | 0 |
| 2 | 0.15 | 1 | 0.23 | 0.5 | 0.31 |
| 4 | 0.29 | 2 | 0.40 | 1 | 0.53 |
| 6 | 0.40 | 3 | 0.55 | 1.5 | 0.67 |
| 8 | 0.50 | 4 | 0.65 | 2 | 0.78 |
| 10 | 0.56 | 5 | 0.73 | 2.5 | 0.85 |
| 12 | 0.64 | 6 | 0.79 | 3 | 0.9 |

A reaction rate formula shown below is determined from these results by regression analysis.

$$r = kC^n$$

$$k = k_0 e^{\left(\frac{E}{RT}\right)}$$

(where n = 1; $k_0 = 1.53 \times 10^9$; E = 77200; r is the reaction rate [kgmol/h/$m^3$]; C is the molar concentration of styrene [kgmol/$m^3$]; n is the order of reaction; $k_0$ is the rate constant expressed by Arrhenius equation; k is the frequency factor [1/hr]; E is activation energy [kJ/mol]; R is a constant 8.314 [kJ/mol/K]; and T is temperature [K]).
A change in styrene concentration C with time is expressed by the following differential equation:

$$\frac{dC}{dt} = -r$$

A solution to this differential equation is shown by the following equation:

$$C = C_0 e^{-kt}$$

(where $C_0$ is the initial molar concentration).

The yield ratio x of polystyrene is equivalent to the styrene conversion rate shown by the following equation:

$$x = \frac{C_0 - C}{C_0} = 1 - e^{-kt}$$

The control mechanism according to the present invention is capable of automatic optimization of a design evaluation function without an intermediate work for determining the above-described chemical reaction rate formula.

A case where this reaction is effected in a microreactor will be considered. The reactor volume is assumed to be V [ml] and the input volumetric flow rate of the row material is Q. If the reactor is assumed to be a plug-flow-type reactor, and if the change in density of the solution due to polymerization is ignored for simplification, the reaction time in the reactor is V/Q [hr]. Also, the reaction time is proportional to the yield amount of polystyrene Qx per unit time. As an evaluation function with respect to production of polystyrene, a value $Qx^2$: yield amount x yield ratio is selected by attaching the substantially same significance to an increase in polystyrene yield amount and to an increase in yield rate due to easy purification.

In the example below, the raw material volumetric flow Q rate and the reactor temperature are selected as design variables. The reactor volume has a constant value of 1 [ml]. The range of control of the volumetric flow rate is 0.05 to 2 [ml/hr]. The range of control of the temperature is from 120 to 160°C. Then the response curve surface of $Qx^2$ is as shown in Figure 5.

In application of the optimization method according to the present invention herein, the control system computes the current $Qx^2$ from the outputs from flow rate and yield ratio sensors in real time or in a slight delay time. The control system changes the flow rate and the temperature according to a designed optimization algorithm and monitors the value of $Qx^2$ each time the flow rate and the temperature are changed, thus enabling search for an optimum point on the response curve surface with less trials. Figure 6 shows a search track on the response curve surface.

As the optimization algorithm, any of methods known as a gradient method, an annealing method, a genetic algorithm and so on may be used. As the evaluation function, any function of measured and set values may be selected. The evaluation function can be freely changed according to a purpose without stopping the operation of the reactor. In a case where there is a limiting condition with respect to control parameters (e.g., the temperature and the flow rate), optimization of the operation under the condition is also possible.

Examples of optimization algorithms applicable to microchannel chip reaction control in accordance with the present invention will be described concretely.

It is necessary to carefully determine reaction conditions in various actual chemical reactions because of the effects of improving the yield ratio, selectivity and yield amount and reducing the amounts of reagents to be wasted. In cases of specifying conditions for chemical reactions according to the conventional art, however, conditions were mainly determined empirically after enormous experimental trial and error.

In the present application, a system capable of obtaining reaction conditions by combining a mathematical method and an automatic control technique without performing preliminary experiments in a carpet bombing manner will be described. Further, there is a possibility that a combination of reaction conditions unpredictable in advance will be found by a search with the control system. Therefore it is also possible to select conditions for obtaining more ideal reaction results.

Operations are first performed to formulate, from limiting conditions (the reagent flow rate, the pressure, the temperature and other conditions,prescribed with respect to a chemical reaction), target amounts (the yield ratio, selectivity, the yield amount and other indices indicating the performance of a chemical reaction) as an evaluation function with respect to changes in the limiting conditions. In ordinary cases of formulation of such conditions, limiting conditions and an evaluation function become nonlinear.

It can be sensuously perceived that the yield ratio or the yield amount cannot be necessarily said to be doubled even though a condition change has been made by doubling the reagent flow rate or the temperature in a chemical reaction for example. Figure 8 shows an example of the results of a peptide synthesis reaction using a microreactor. The ordinate in the graph in Figure 18 represents the yield ratio, and the abscissa represents the flow rate of a reagent solution. From these results, it can be understood that in the case of a peptide synthesis reaction using a microreactor the "most suitable flow rate range" exists. Also, operations for controlling evaluation indices (e.g., the yield amount and selectivity) other than the yield ratio in an optimum condition by adjusting various reaction conditions (e.g., the temperature, the pressure, and the reagent concentration, and the flow rate) other than the reagent flow rate are extremely difficult to perform because they are in a complicated nonlinear relationship.

Some of these problems can be solved by linear approximation. In many cases, however, handling of such problems in nonlinear form is necessarily required, as in the above-described peptide synthesis results. With becoming nonlinear, mathematical difficulties in solving are abruptly increased and it is uncertain that the problem can be unfailingly solved like a linear problem. There is, therefore, no versatile method of solution and there is a need to use various methods with respect to different cases.

A steepest-descent method, which is a kind of gradient method as a mathematical optimization method in gradient methods, and an adaptive simulated annealing method (ASA), which is a method of optimization in a searching manner, will be described by way of example.

Mathematical optimization method

A steepest-descent method, which is the most basic method among gradient methods using a gradient vector of an evaluation function as a mathematical optimization method will be described. A gradient vector g of an evaluation function $f(x_1, x_2, ..., x_n)$ can be obtained by

$$g = \nabla f = \left[ \frac{\partial f}{\partial x_1}, \frac{\partial f}{\partial x_2}, \cdots, \frac{\partial f}{\partial x_n} \right]$$

(where xn represents various limiting condition parameters).

The direction of g coincides with the direction of the maximum of the rate of change in f. Therefore, as shown in Figure 19, the search direction $s^{(q)} = -g^{(q)}$ is a vector indicating the direction of the steepest descent. In Figure 19, the ordinate and abscissa are different limiting condition parameters and the contour lines are values of the evaluation function. The calculation is progressed by setting the step width $\alpha$ to 1 or less in

$$x^{(q+1)} = x^{(q)} - \alpha g^{(q)}$$

to obtain the optimum value.

In the steepest-descent method, however, failure to converge may result if the evaluation function has a deformed configuration.

The peptide synthesis (the yield ratio with respect to the reagent flow rate) apparently shows a nonlinear result. In the reaction, only one peak value is exhibited and the range of the limiting condition (flow rate) is not so wide. Therefore it is not difficult to experimentally obtain the optimum solution in a carpet bombing manner. However, even in the peptide synthesis reaction shown in Figure 18, the probability of the existence of a plurality of peak values is high if the temperature, concentration, flow rate and pressure of the reagent solution for example are changed and if the parameters nonlinearly influence the evaluation indices (e.g., the yield rate, the yield amount and selectivity). Also, the number of preliminary experiments becomes enormous as the number of parameters is increased. Therefore the effect of adopting a mathematical optimization method such as that described above is extremely high in comparison with the method in a carpet bombing manner.

Further, since no versatile method of solution to a nonlinear problem such as that described above exists, a number of other methods have been proposed as a mathematical optimization method. According to the control method described in this specification, a optimization method suitable for each chemical reaction can be selected and adapted. Table 2 shows a list of typical mathematical optimization methods for reference purpose. In particular, in a case where there are many limiting conditions and the range of each parameter is wide, it is preferable to use a plurality of mathematical methods in combination for selection of optimum conditions.

Table 2

| English name | Japanese name | Features |
|---|---|---|
| MFD: Method of Feasible Direction | Feasible direction method | · At a design point apart from a limiting condition, an optimal solution search is made by a conjugate gradient method.<br>· In the vicinity of a limiting condition, both an objective function and the limiting condition are linearized and a problem is solved by linear programming.<br>· Equality constraint cannot be handled. |
| MMFD: Modified Method of Feasible Direction | Modified feasible direction method | · Established by developing a feasible direction method so as to enable handling of an equality constraint condition.<br>Having good affinity in combination with 2nd order RSM. |
| SLP: Sequential Linear Programming | Sequential linear programming | Both an objective function and the limiting condition are linearized at all times and a problem is solved by repeatingly using linear programming. |
| SQP: Sequential Quadric Programming | Sequential quadric programming (DONLP) | An optimal solution is obtained by solving a Kuhn-Tucker condition satisfying an objective function and a limiting condition.<br>For determination of an optimal direction, a quasi-Newton method is used. |
| EP: Exterior Penalty | Exterior penalty function method | · A limiting condition is added as a penalty function to an objective function.<br>An extended objective function is solved by a quasi-Newton method. |
| NLPQL | Sequential quadric programming (Schittkowski) | An extension for increasing the robustness of computation is added in addition to SQP in DQNLP edition. An improvement is made in a unidimensional search portion in particular.<br>In the case of solving an optimization problem with respect to a continuous variable, use of it is first recommended. |
| HJ: Hook-Jeeves | Hooke-Jeeves pattern search method | A change in an objective function is computed with respect to the direction of each design variable. If the value of the objective function is improved, a move in the corresponding direction is made.<br>· The solution method ordinarily has a slow improvement speed but is stable because no matrix solution is required in its computation.<br>Preferably used if the above-described methods fail. |
| SAM: Successive Approximation Method | Successive approximation method | Use on a continuous variable-discrete variable mixture problem is recommended.<br>A continuous variable undergoes local 1 st order approximation along with an objective function and a limiting condition and a solution is obtained repetitively.<br>A branch limitation method is used with respect to a discrete variable. |

(continued)

| English name | Japanese name | Features |
|---|---|---|
| MOST: Multifunctional Optimization System Tool | | Use on a continuous variable-discrete variable mixture problem is recommended.<br>A discrete variable is temporarily regarded as a continuous variable and a temporary optimal solution search is then made by SQP (inner loop).<br>An operation to return a numeric value obtained by the inner loop with respect to the discrete variable to a discrete value is performed by a branch limitation method (outer loop).<br>· Enjoying higher convergence in comparison with SAM with respect to a problem with which continuous approximation is good for a discrete variable. |
| LSGRG2 | | . Good in adaptability to nonlinear problems.<br>. Unsuitable for a problem having a noncontinuous solution space.<br>· Capable of handling a nonequality constraint condition and an equality constraint condition. With respect to a problem having an equality constraint condition in particular, a good result can be expected in comparison with other methods. |

Searching optimization Method

One of kinds of difficulty in optimization in a nonlinear problem resides in that an evaluation function does not necessarily have only one peak value; several peaks (or valleys) exist, as shown in Figure 20. Each of them is a local optimum and does not necessarily coincide with a global optimum, i.e., a true optimum value. Such an event occurs frequently with the characteristics of an evaluation function, as well as the characteristics of a limiting condition expression or the characteristics of both of them. As a method of obtaining a global optimum without erroneously taking a local optimum, a searching optimization method may be used in this control.

An adaptive simulated annealing (ASA) will be described below as a typical searching optimization method by way of example.

This method is an algorithm modeled on annealing of a metal (gradual cooling enabling the energy of molecules that has been at a high level to uniformly settle to a low level). Figure 21 shows a graphical representation of convergence by ASA. The ordinate of Figure 21 represents the value of an evaluation function, and the abscissa represents a limiting condition parameter. In the example shown in Figure 21, a smaller value of the evaluation function is to be as an optimum value. Optimization is started from an initial value. In an initial stage of an optimization search, energy enough for escapement from a local optimum is given and the search is progressed while permitting a partial solution change for the worse. A variety of solutions are produced in this way to enable a global search. The energy is gradually reduced with the progress in the search to enable an optimum value to be obtained in a final stage of the search without moving to any other peak value in the vicinity of the global optimum.

In a searching method, there is a need to suitably adjust various conditions for a search (e.g., an initial value and an energy reducing condition) with respect to each chemical reaction. However, an erroneous recognition that optimization is completed after obtaining a local optimum can be prevented. A genetic algorithm (GA) or the like may be used as a searching optimization method other than ASA.

In a case where only a standard optimization is used, there is a possibility of conditions not suitable for actually operating a microreactor, e.g., "the yield amount is extremely low while the yield ratio is extremely high" and "the yield ratio and the yield amount are high but the pressure condition is of an extremely high, the running cost is high. Risky." will be obtained. Avoiding these problems requires optimization (multi-purpose optimization) suitable for the actual operation, e.g., optimization as to "when each of the yield ratio, yield amount and selectivity is about a value in this range, what is the most suitable operating condition in this range?". For multi-purpose optimization, adherence to a standard optimization method is undesirable. If a plurality of mathematical and searching methods are combined according to each chemical reaction, more favorable results can be obtained.

## Claims

1. A microchannel chip reaction control system having at least two microfluidic channels for introducing reagent solutions and a microfluidic reaction channel formed by joining at least two microfluidic channels to each other, the system comprising:

   analysis means for analyzing a product produced by reaction between the reagent solutions merging with each other in the microfluidic reaction channel; and
   control means for controlling conditions relating to the reaction in the microfluidic reaction channel on the basis of analysis results obtained from the analysis means.

2. The microchannel chip reaction control system according to claim 1, wherein the control means is capable of controlling the flow rate, concentration, temperature and/or pressure of each of the reagent solution in the microfluidic channel and/or the microfluidic reaction channel.

3. The microchannel chip reaction control system according to claim 2, wherein the control means is further capable of controlling the flow rate, concentration, temperature and/or pressure of each of the reagent solution in the microfluidic channel and/or the microfluidic reaction channel on the basis of the ambient temperature and/or the ambient pressure around the microchannel chip.

4. The microchannel chip reaction control system according to any one of claims 1 to 3, wherein the analysis means is capable of measuring the proportions of components in the product produced in the microfluidic reaction channel.

5. The microchannel chip reaction control system according to any one of claims 1 to 4, wherein the analysis means is capable of measuring the amount of at least one of components in the product produced in the microfluidic reaction channel.

6. The microchannel chip reaction control system according to any one of claims 1 to 5, wherein the control means is capable of controlling the temperature of the microchannel chip and the flow rate and/or concentration of each reagent solution by monitoring at all times or for a certain time period the temperature of the microchannel chip and the proportions or the amounts of components in the product produced in the microfluidic reaction channel and by feeding back the results of monitoring at any time.

7. The microchannel chip reaction control system according to claim 6, wherein the control means is capable of controlling the temperature of the microchannel chip and the flow rate and/or concentration of each reagent solution by monitoring at all times or for a certain time period the ambient temperature and the ambient pressure around the microchannel chip and the pressure in the microfluidic channel and by feeding back the results of monitoring at any time.

8. The microchannel chip reaction control system according to any one of claims 1 to 7, wherein a heat-transfer medium channel is provided in parallel with a portion of a predetermined length in the microfluidic reaction channel, and temperature adjustment in a reaction region is performed via a heat-transfer medium delivered into the heat-transfer medium channel.

9. The microchannel chip reaction control system according to claim 8, wherein the heat-transfer medium channel is formed in a double-pipe structure coaxial with the microfluidic reaction channel.

10. The microchannel chip reaction control system according to claim 8 or 9, wherein a plurality of the heat-transfer medium channels are provided along the microfluidic reaction channel.

11. The microchannel chip reaction control system according to any one of claims 8 to 10, wherein a temperature sensor is provided in the microfluidic reaction channel.

12. The microchannel chip reaction control system according to claim 11, wherein the temperature sensor comprises a resistance bulb or a thermocouple.

13. The microchannel chip reaction control system according to any one of claims 8 to 12, wherein the analysis means comprises a chromatography device.

14. The microchannel chip reaction control system according to any one of claims 8 to 13, wherein the control means is capable of controlling the operation of a heat-transfer medium delivery means for delivering the heat-transfer medium into the heat-transfer medium channel on the basis of outputs from the analysis means and the temperature sensor.

15. The microchannel chip reaction control system according to claim 14, wherein the control means is capable of independently adjusting the temperatures of the plurality of heat-transfer medium channels.

16. The microchannel chip reaction control system according to any one of claims 1 to 7, wherein a temperature adjustment device is provided which performs temperature adjustment in a reaction region by irradiating the microfluidic reaction channel with laser light.

17. The microchannel chip reaction control system according to claim 16, wherein a temperature sensor is provided in the microfluidic reaction channel.

18. The microchannel chip reaction control system according to claim 17, wherein the temperature sensor comprises a resistance bulb or a thermocouple.

19. The microchannel chip reaction control system according to any one of claims 16 to 18, wherein the control means performs temperature adjustment in the reaction region by changing the output of the laser light and/or changing the focal distance of the laser light.

20. The microchannel chip reaction control system according to any one of claims 16 to 19, wherein the temperature adjustment device is capable of irradiating a plurality of regions in the microchannel chip with laser light.

**21.** The microchannel chip reaction control system according to any one of claims 16 to 20, further comprising the arrangement according to any one of claims 8 to 15.

**22.** A micro total reaction system comprising the microchannel chip reaction control system according to any one of claims 1 to 21, the micro total reaction system being capable of controlling reaction conditions between raw material components for production of a substance in the microchannel chip.

**23.** A micro total reaction system comprising the microchannel chip reaction control system according to any one of claims 1 to 21, the micro total reaction system being capable of controlling reaction conditions between a reagent compound and a chemical compound to be tested in the microchannel chip.

[Figure 1]

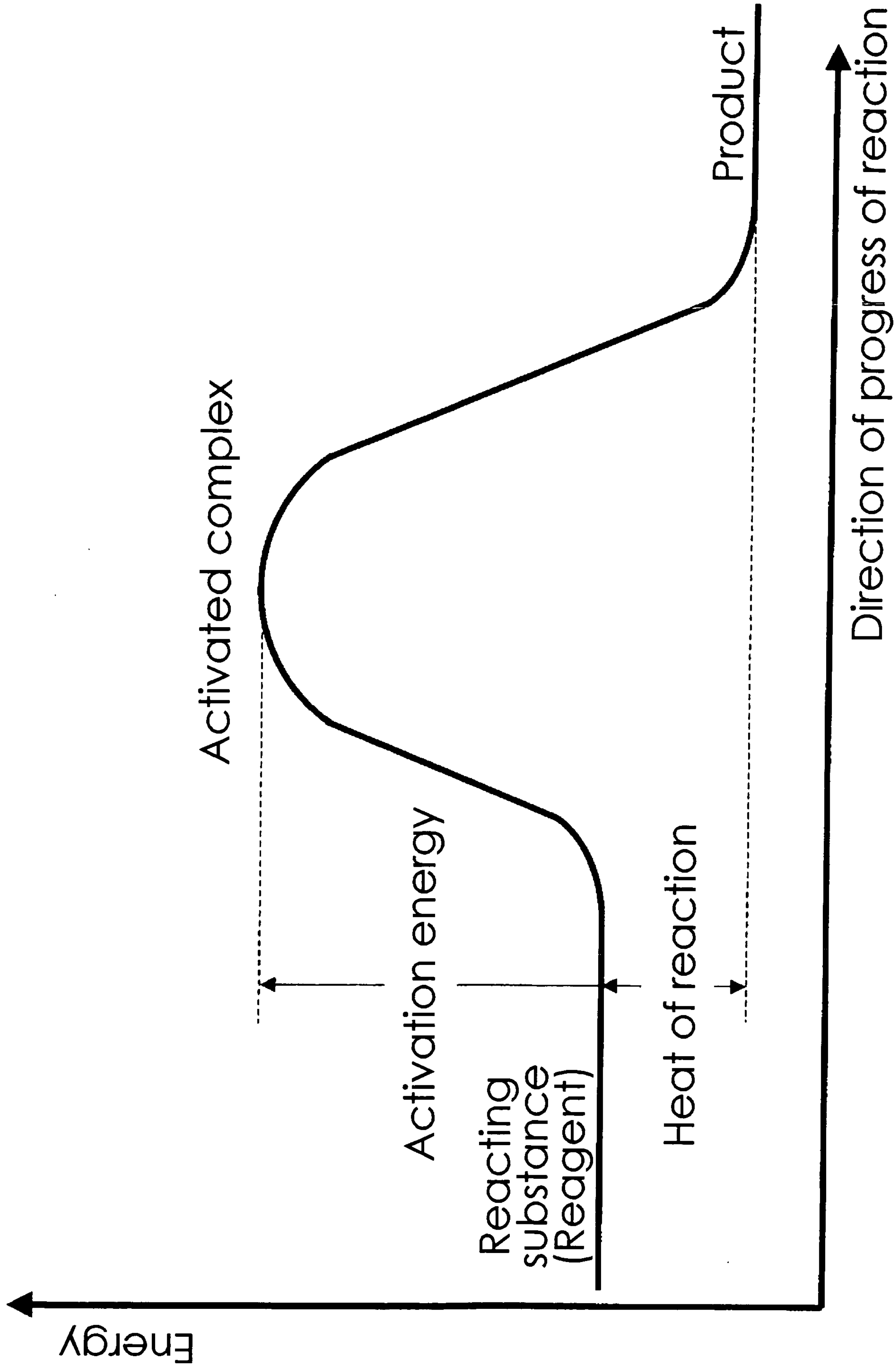
Activated complex
Product
Activation energy
Heat of reaction
Reacting substance (Reagent)
Energy
Direction of progress of reaction

[Figure 2]

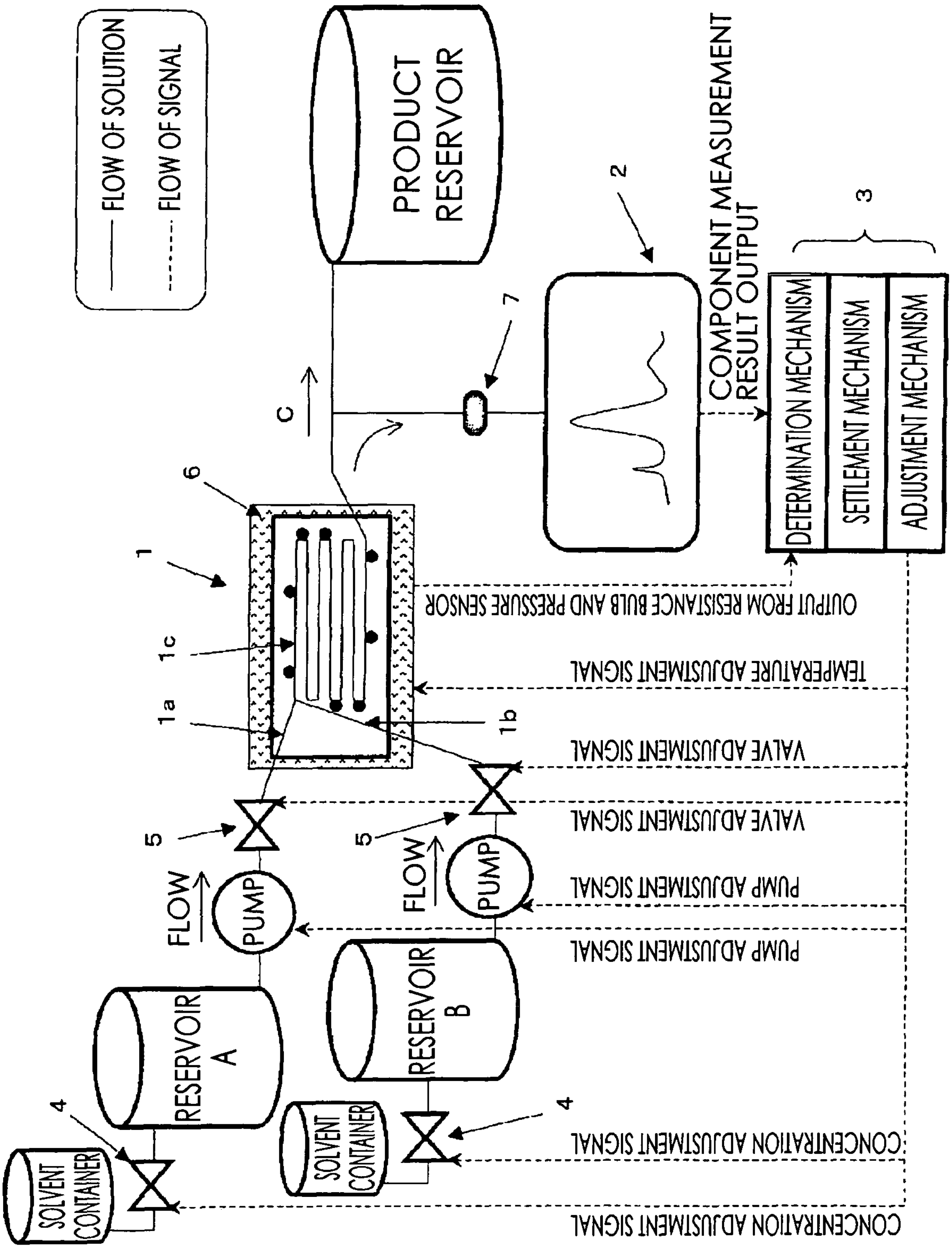
FLOW OF SOLUTION
FLOW OF SIGNAL
PRODUCT RESERVOIR
COMPONENT MEASUREMENT RESULT OUTPUT
DETERMINATION MECHANISM
SETTLEMENT MECHANISM
ADJUSTMENT MECHANISM
OUTPUT FROM RESISTANCE BULB AND PRESSURE SENSOR
TEMPERATURE ADJUSTMENT SIGNAL
VALVE ADJUSTMENT SIGNAL
VALVE ADJUSTMENT SIGNAL
PUMP ADJUSTMENT SIGNAL
PUMP ADJUSTMENT SIGNAL
CONCENTRATION ADJUSTMENT SIGNAL
CONCENTRATION ADJUSTMENT SIGNAL
RESERVOIR A
RESERVOIR B
SOLVENT CONTAINER
SOLVENT CONTAINER
PUMP
PUMP
FLOW
FLOW
C
1
1a
1b
1c
2
3
4
4
5
5
6
7

[Figure 3]

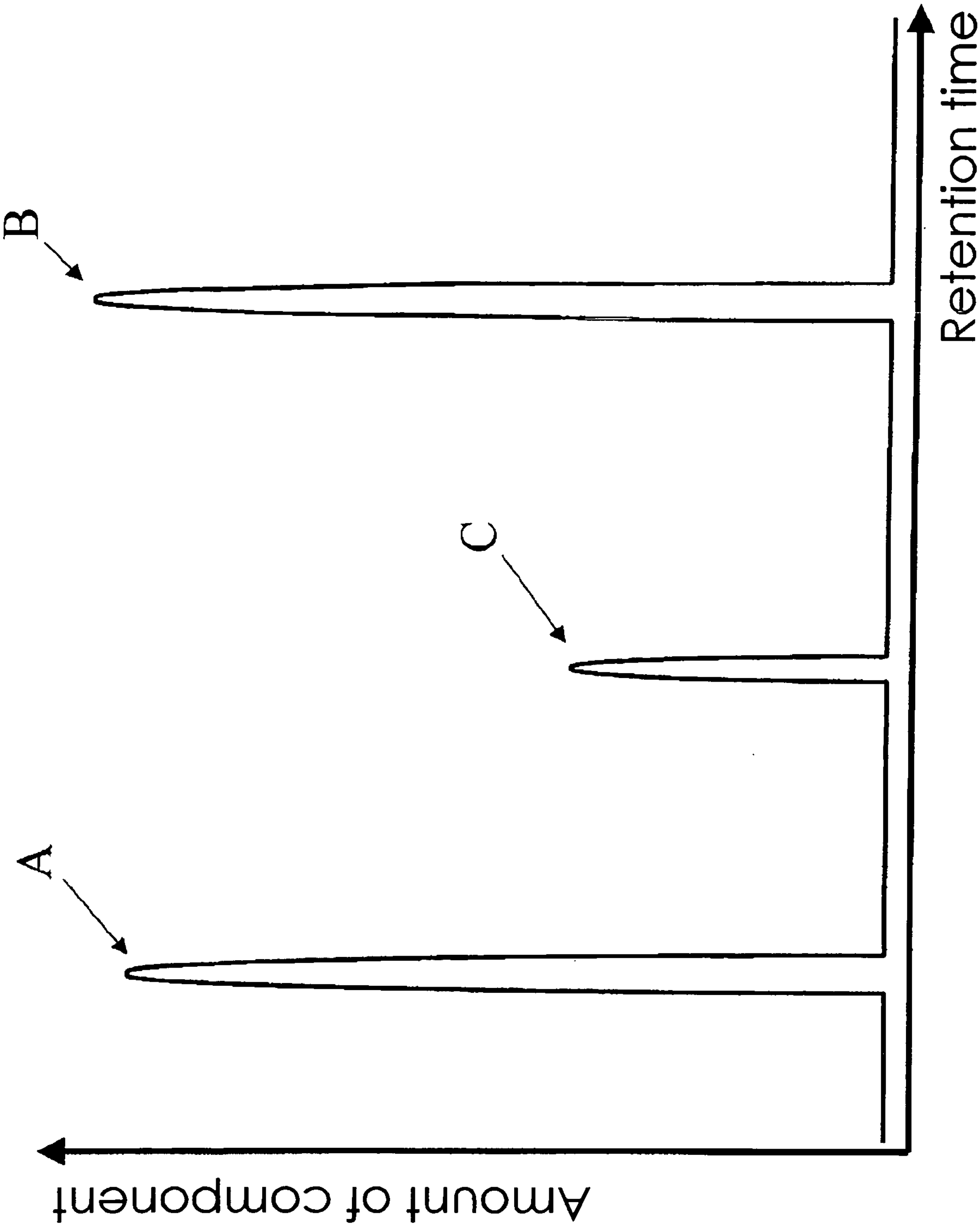

[Figure 4]

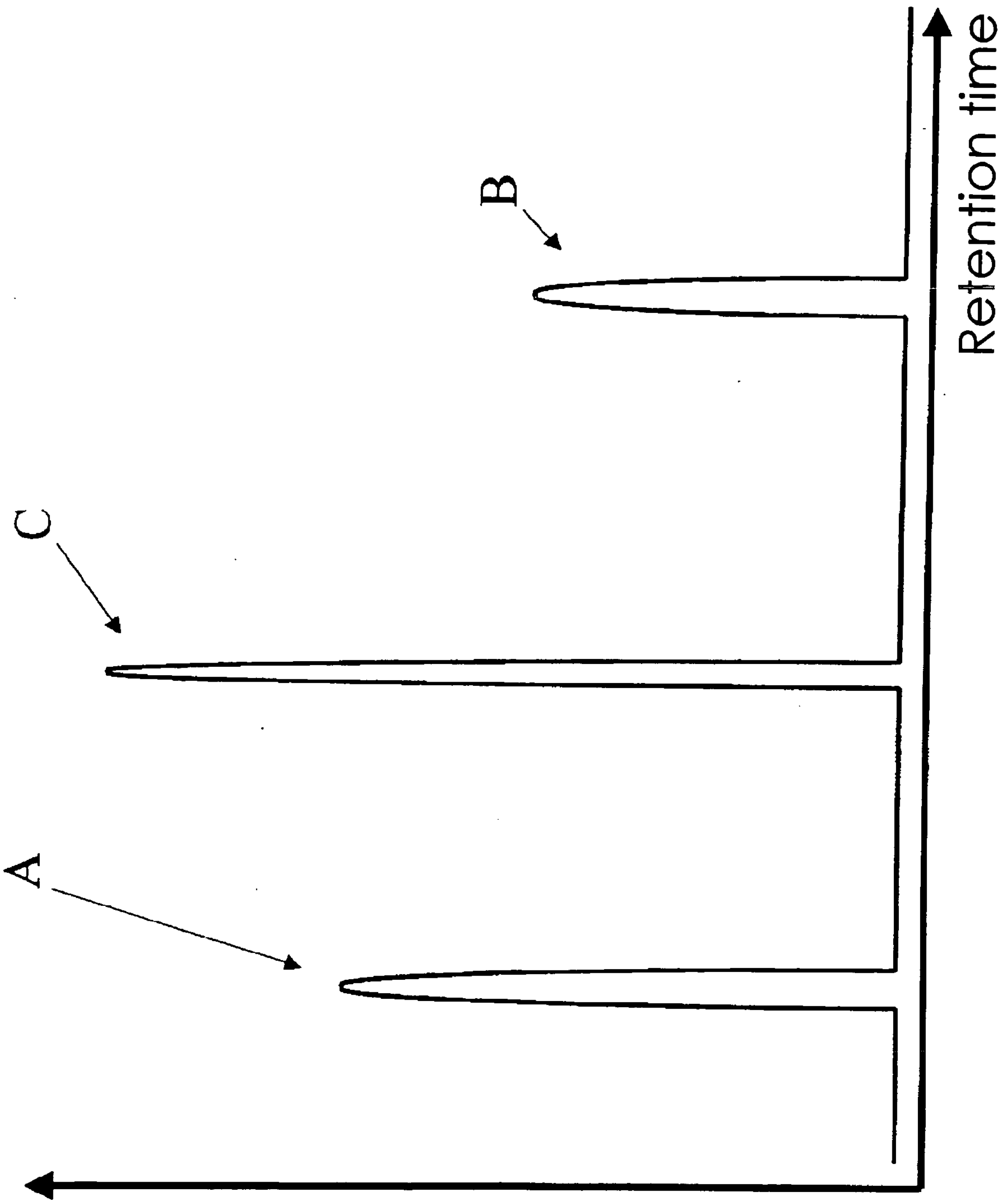

[Figure 5]

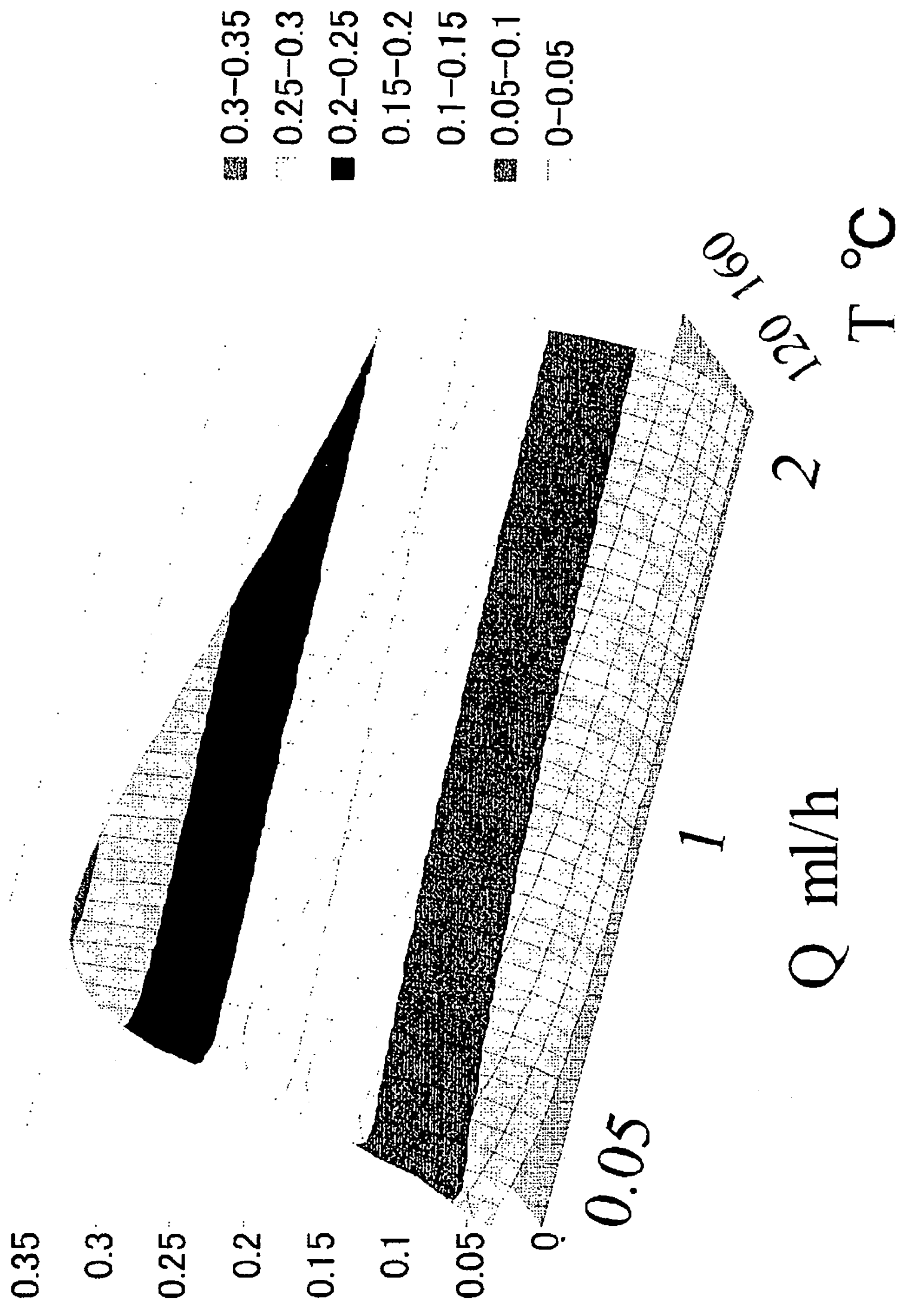
0.3–0.35
0.25–0.3
0.2–0.25
0.15–0.2
0.1–0.15
0.05–0.1
0–0.05
T °C
120 160
Q ml/h
0.05
1
2
0
0.05
0.1
0.15
0.2
0.25
0.3
0.35

[Figure 6]

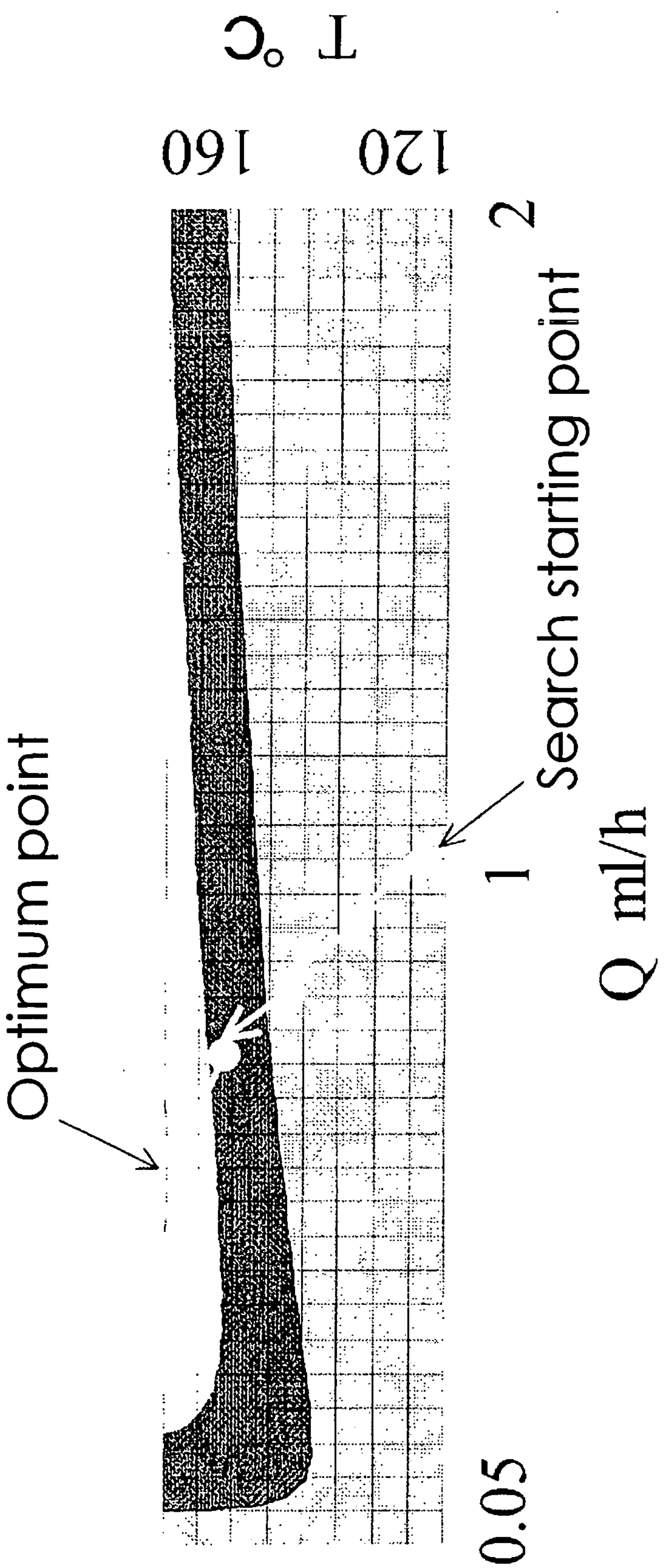

[Figure 7]

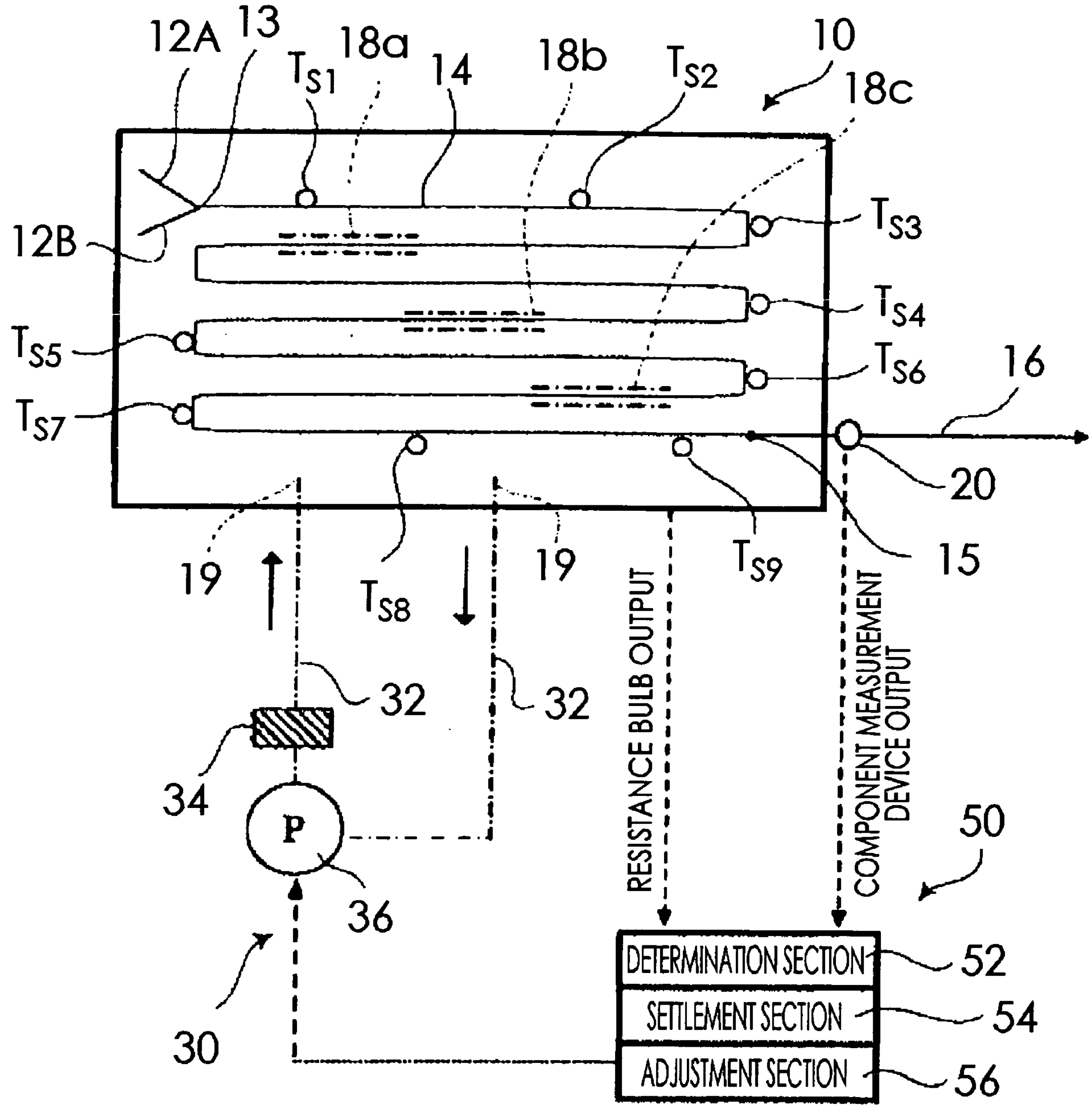
12A
13
$T_{S1}$
18a
14
18b
$T_{S2}$
10
18c
12B
$T_{S3}$
$T_{S4}$
$T_{S5}$
$T_{S6}$
16
$T_{S7}$
20
19
$T_{S8}$
19
$T_{S9}$
15
RESISTANCE BULB OUTPUT
COMPONENT MEASUREMENT DEVICE OUTPUT
32
32
34
P
36
50
30
DETERMINATION SECTION
52
SETTLEMENT SECTION
54
ADJUSTMENT SECTION
56

[Figure 8]

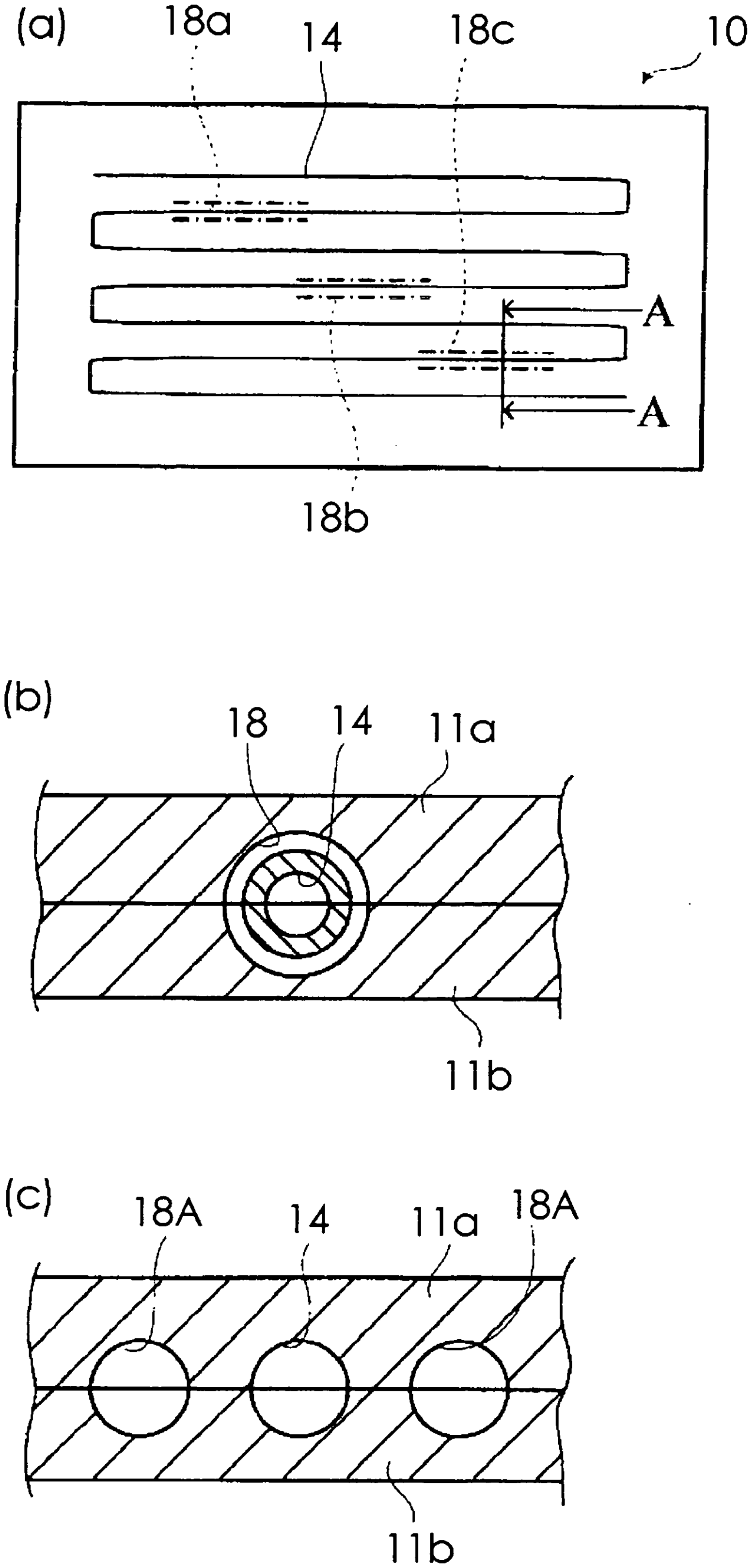

[Figure 9]

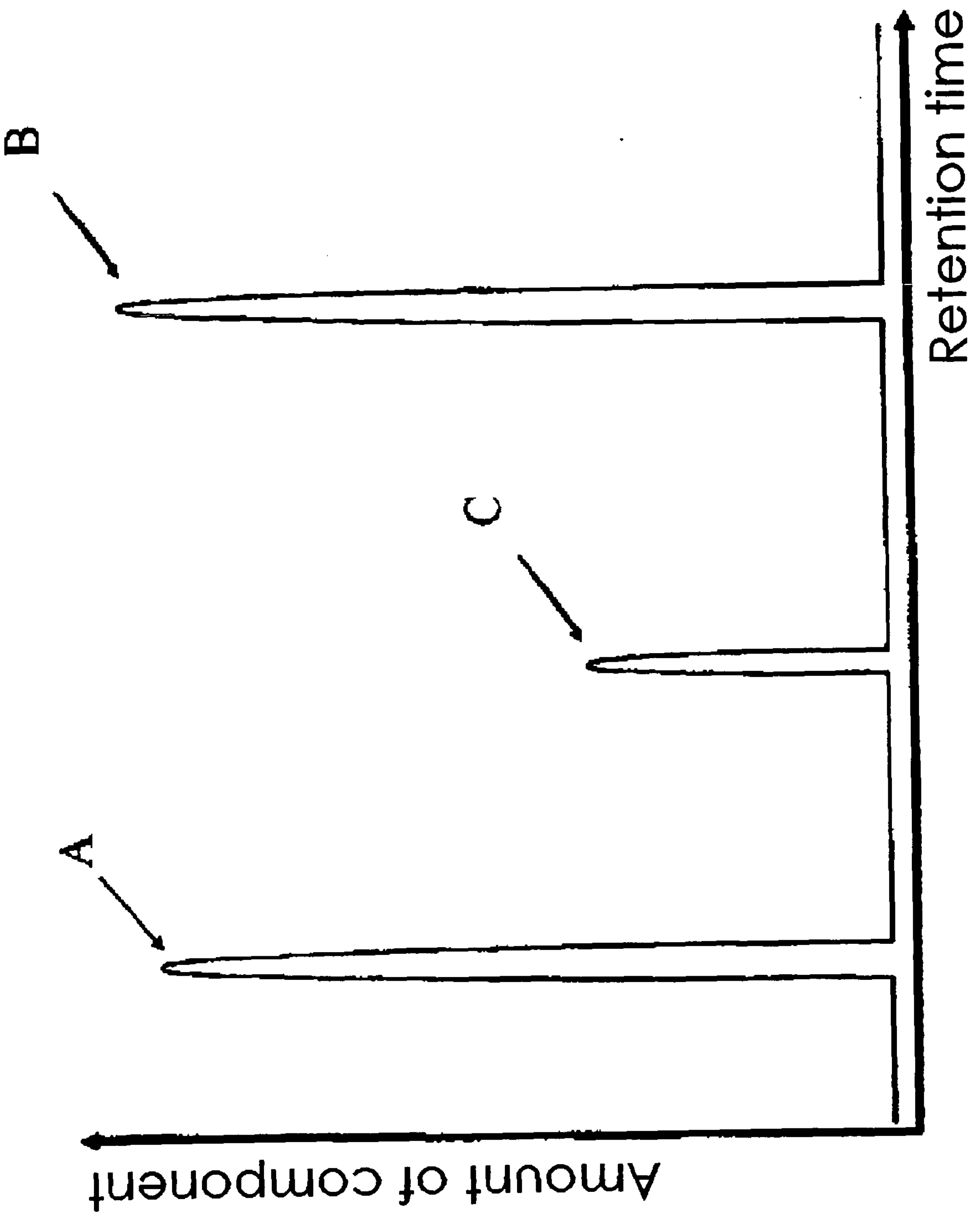

[Figure 10]

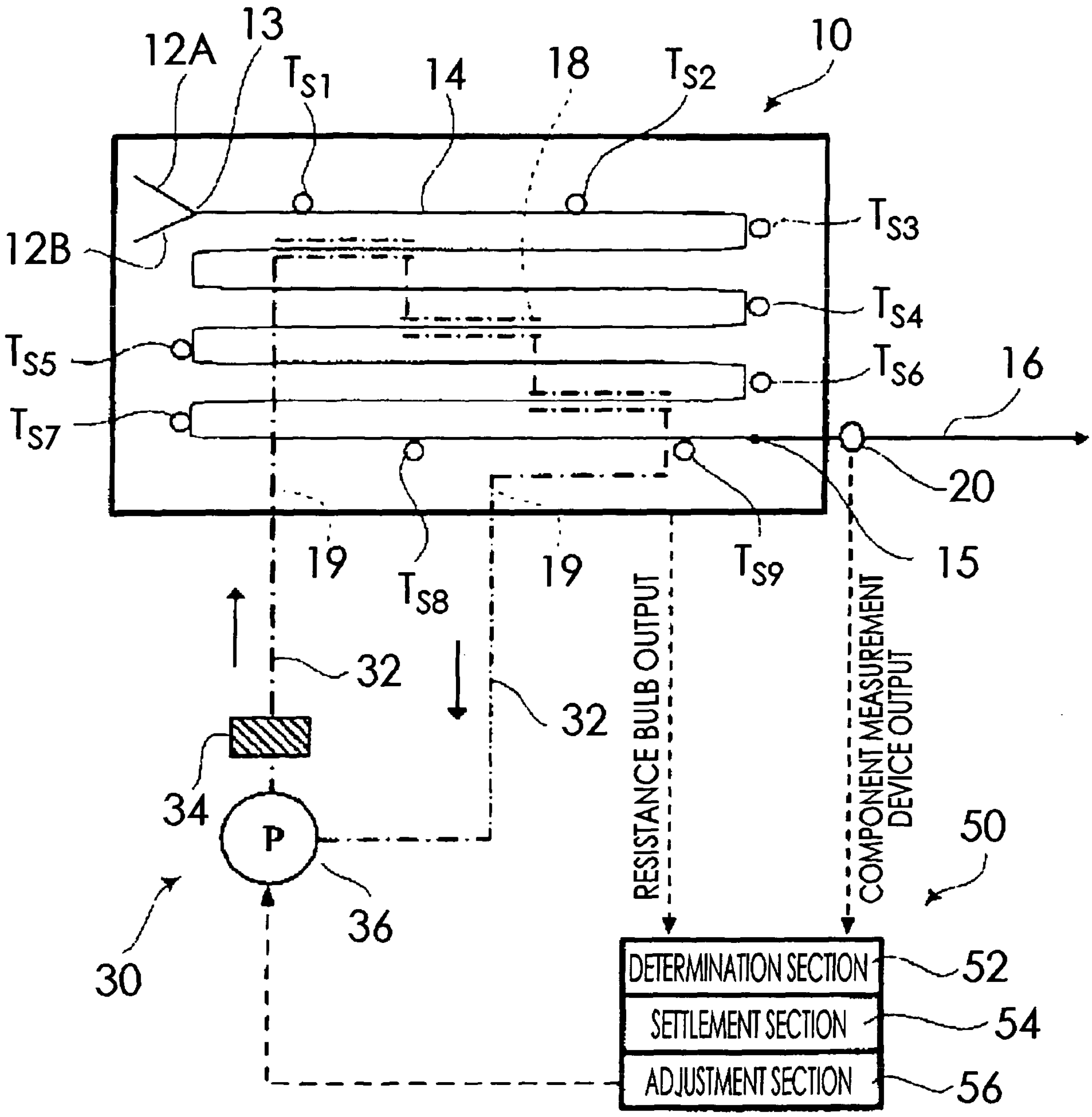
12A
13
$T_{S1}$
14
18
$T_{S2}$
10
12B
$T_{S3}$
$T_{S4}$
$T_{S5}$
$T_{S6}$
16
$T_{S7}$
20
19
$T_{S8}$
19
$T_{S9}$
15
RESISTANCE BULB OUTPUT
COMPONENT MEASUREMENT DEVICE OUTPUT
32
32
34
P
36
30
50
DETERMINATION SECTION
52
SETTLEMENT SECTION
54
ADJUSTMENT SECTION
56

[Figure 11]

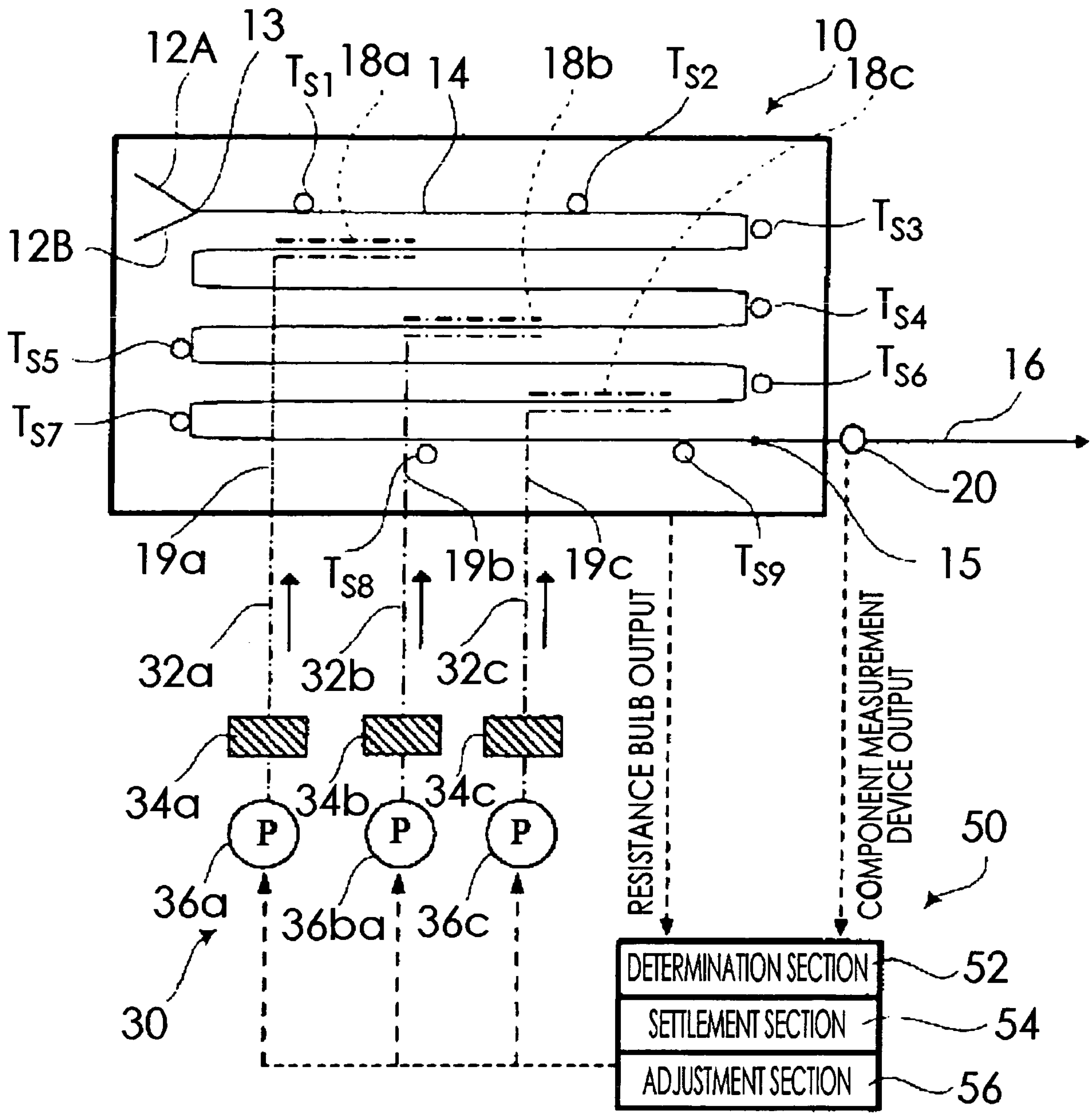
12A
13
$T_{S1}$
18a
14
18b
$T_{S2}$
10
18c
12B
$T_{S3}$
$T_{S4}$
$T_{S5}$
$T_{S6}$
16
$T_{S7}$
20
19a
$T_{S8}$
19b
19c
$T_{S9}$
15
32a
32b
32c
RESISTANCE BULB OUTPUT
COMPONENT MEASUREMENT DEVICE OUTPUT
34a
34b
34c
P
50
36a
36ba
36c
30
DETERMINATION SECTION
52
SETTLEMENT SECTION
54
ADJUSTMENT SECTION
56

[Figure 12]

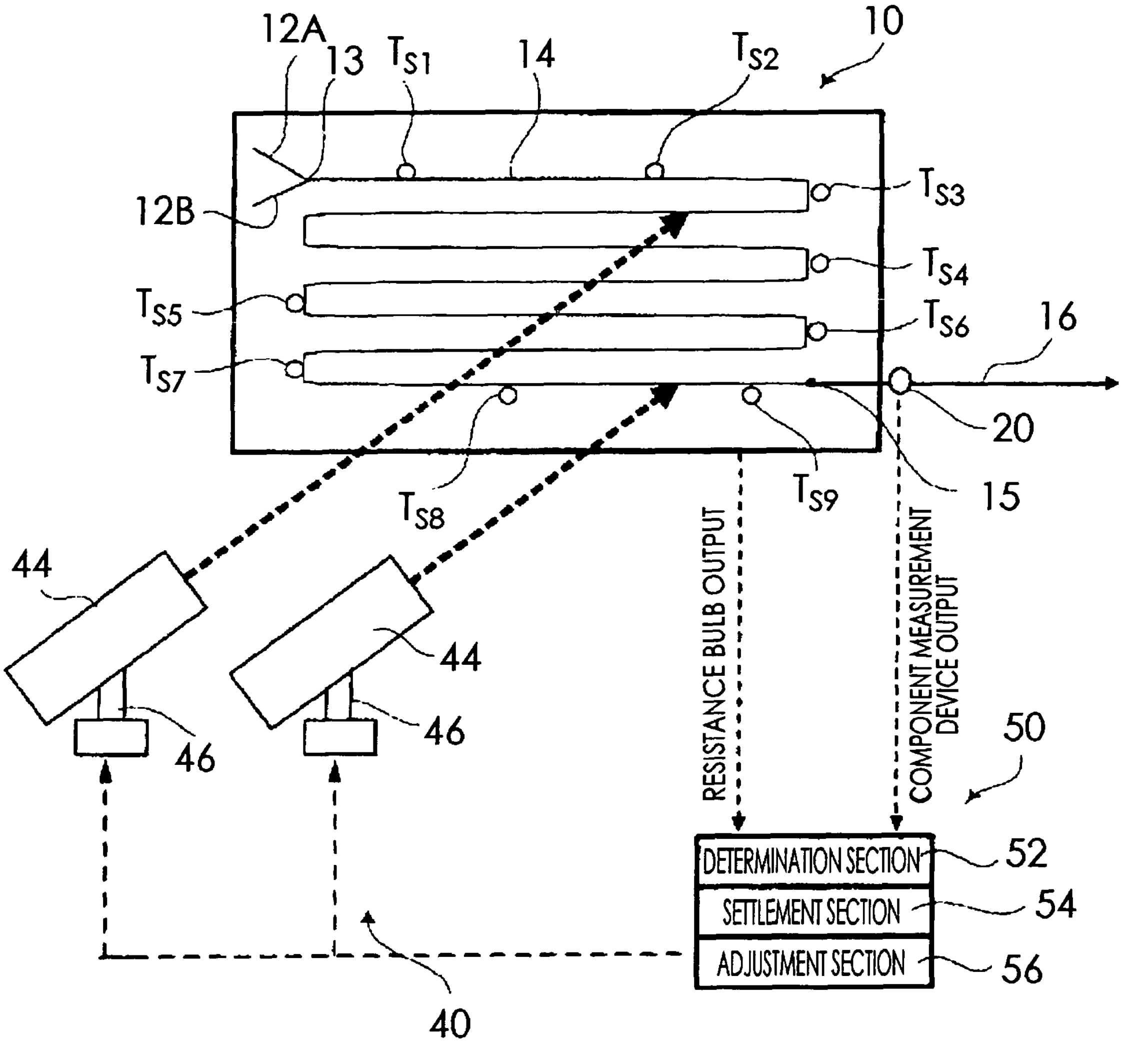
12A
13
$T_{S1}$
14
$T_{S2}$
10
12B
$T_{S3}$
$T_{S4}$
$T_{S5}$
$T_{S6}$
16
$T_{S7}$
20
$T_{S8}$
$T_{S9}$
15
44
44
46
46
RESISTANCE BULB OUTPUT
COMPONENT MEASUREMENT DEVICE OUTPUT
50
DETERMINATION SECTION
52
SETTLEMENT SECTION
54
ADJUSTMENT SECTION
56
40

[Figure 13]

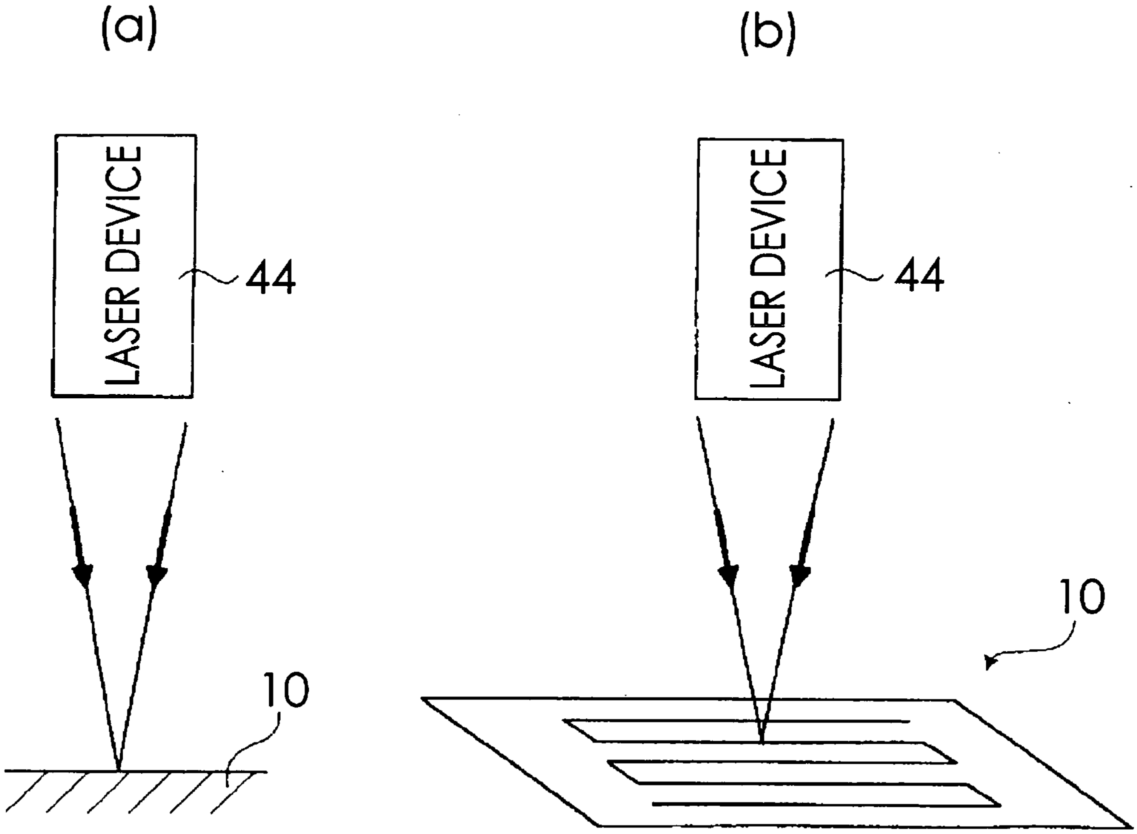

[Figure 14]

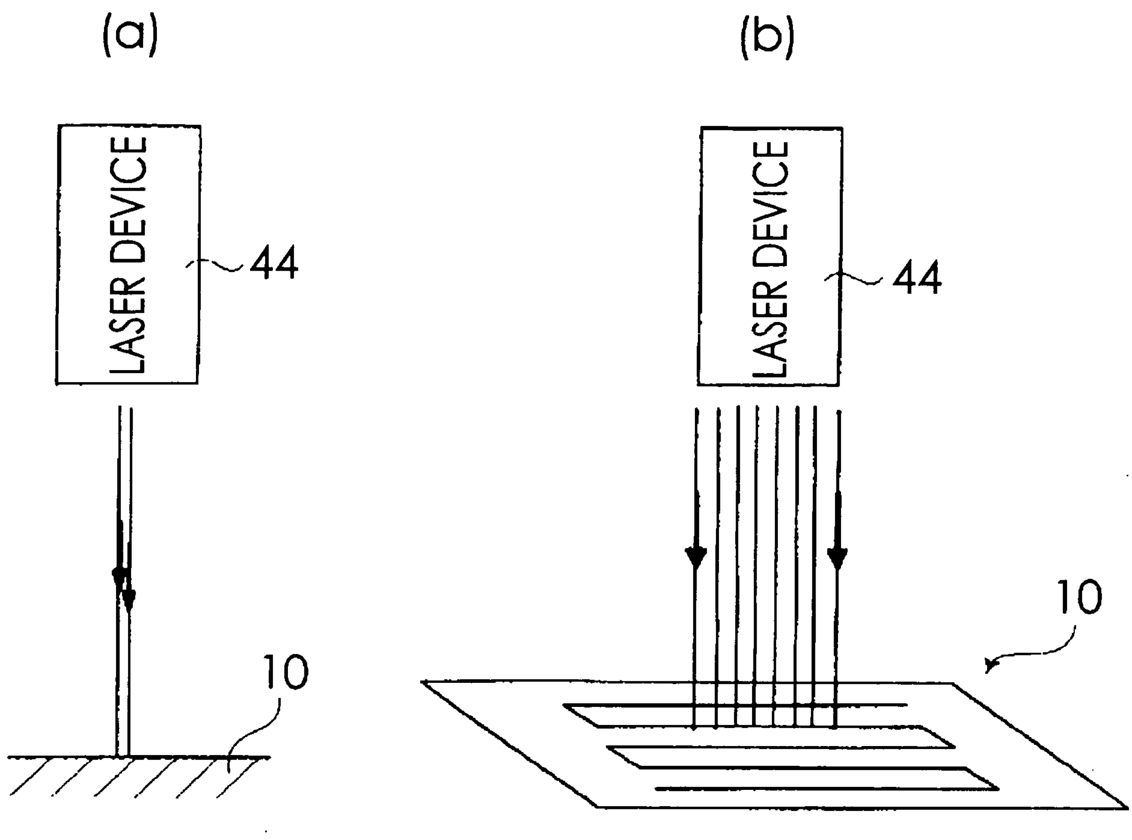

[Figure 15]

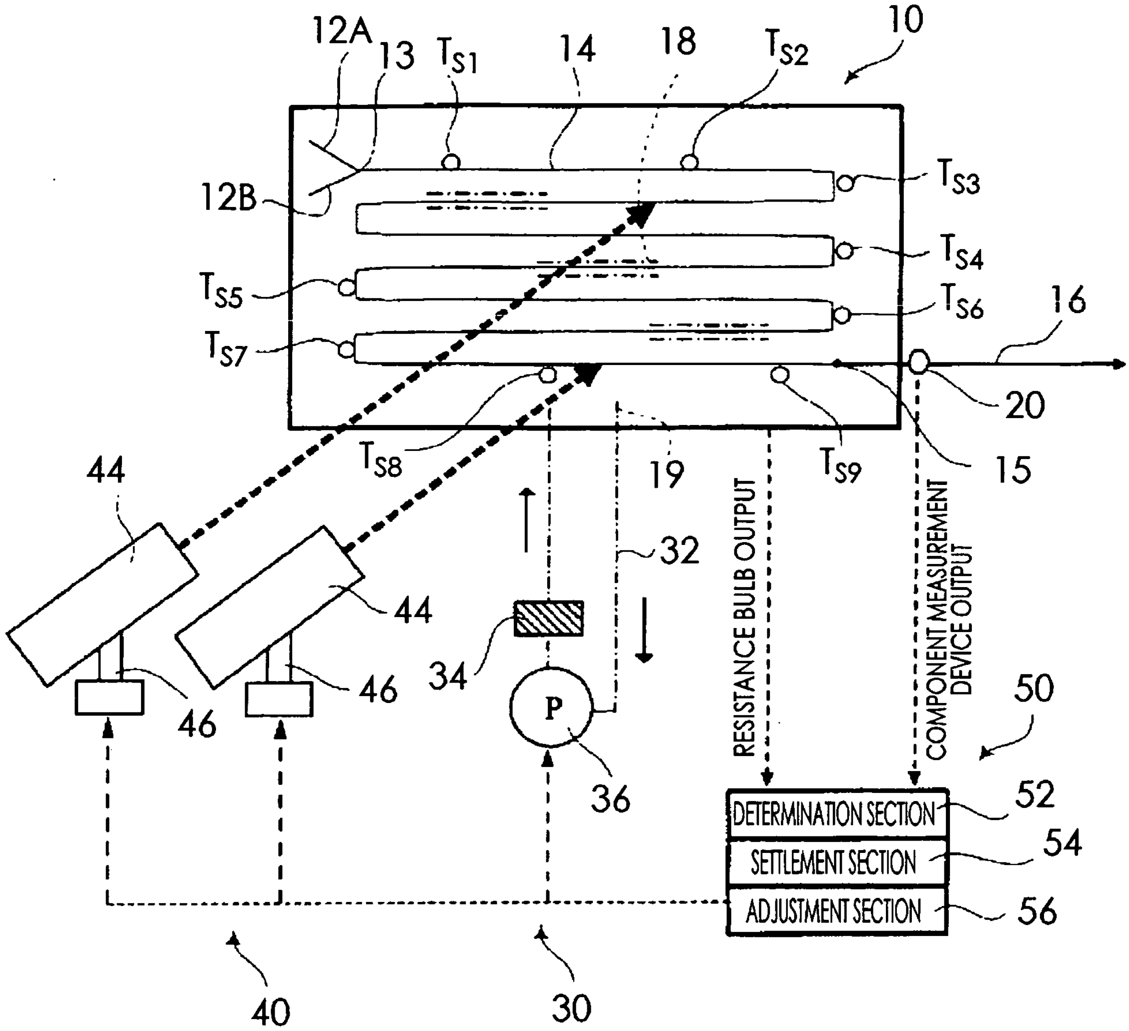
12A
13
$T_{S1}$
14
18
$T_{S2}$
10
12B
$T_{S3}$
$T_{S4}$
$T_{S5}$
$T_{S6}$
16
$T_{S7}$
20
$T_{S8}$
19
$T_{S9}$
15
44
44
32
RESISTANCE BULB OUTPUT
COMPONENT MEASUREMENT DEVICE OUTPUT
34
46
46
P
36
50
52
DETERMINATION SECTION
54
SETTLEMENT SECTION
56
ADJUSTMENT SECTION
40
30

[Figure 16]

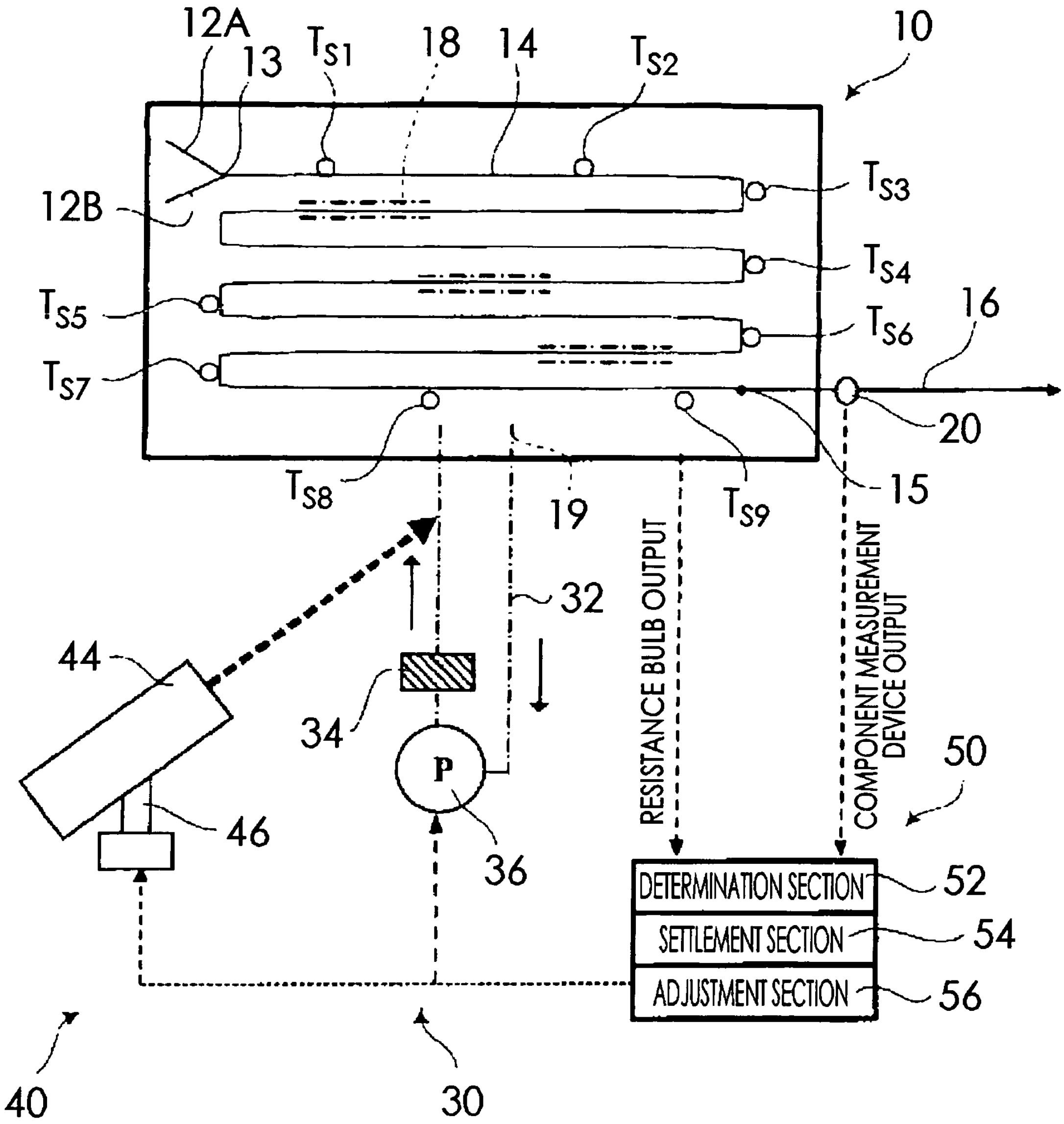
12A
13
TS1
18
14
TS2
10
12B
TS3
TS4
TS5
TS6
16
TS7
20
TS8
19
TS9
15
32
RESISTANCE BULB OUTPUT
COMPONENT MEASUREMENT DEVICE OUTPUT
44
34
P
50
46
36
DETERMINATION SECTION
52
SETTLEMENT SECTION
54
ADJUSTMENT SECTION
56
40
30

[Figure 17]

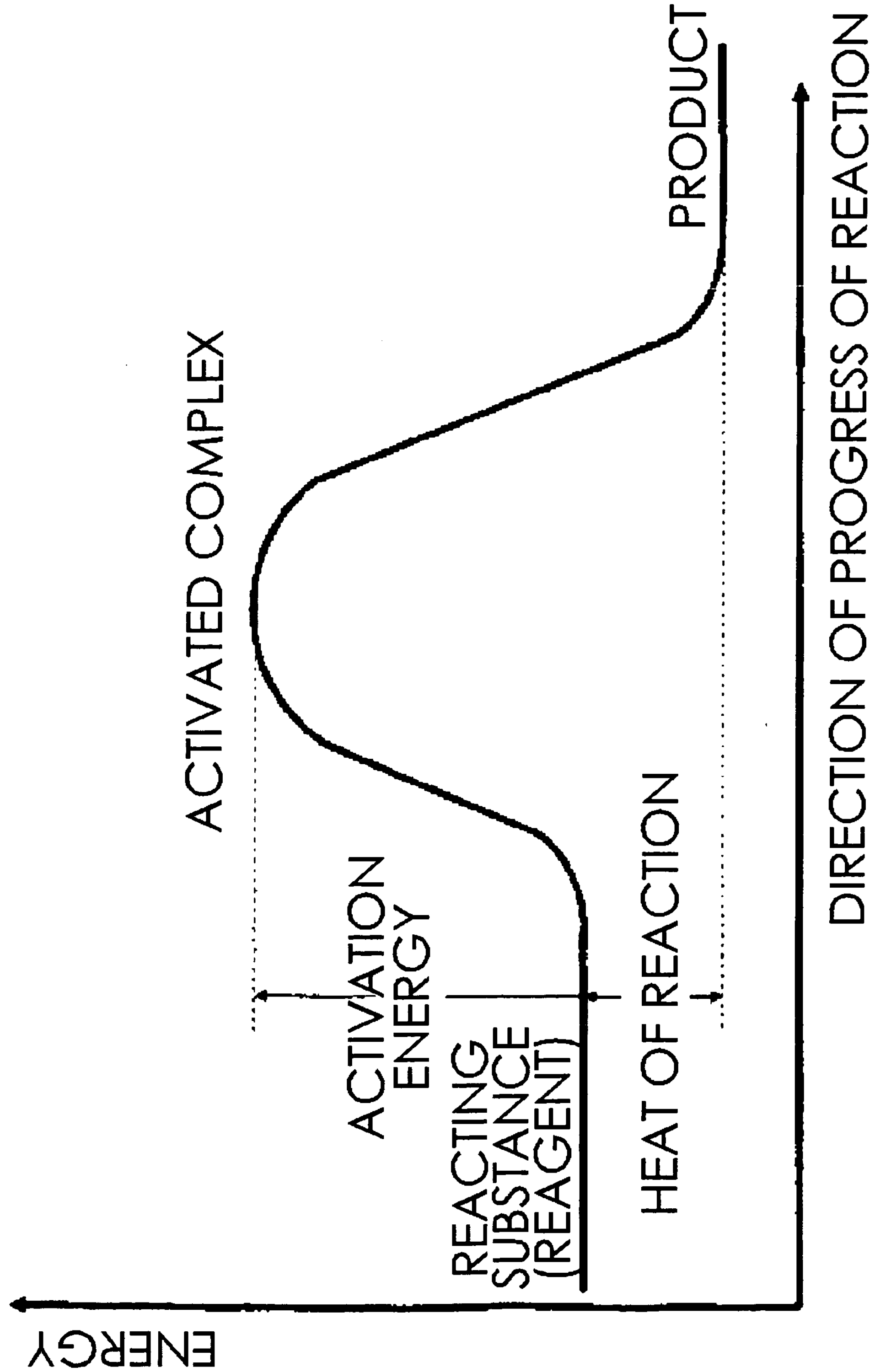
ACTIVATED COMPLEX
PRODUCT
ACTIVATION ENERGY
REACTING SUBSTANCE (REAGENT)
HEAT OF REACTION
DIRECTION OF PROGRESS OF REACTION
ENERGY

[Figure 18]

# Synthesis of peptide

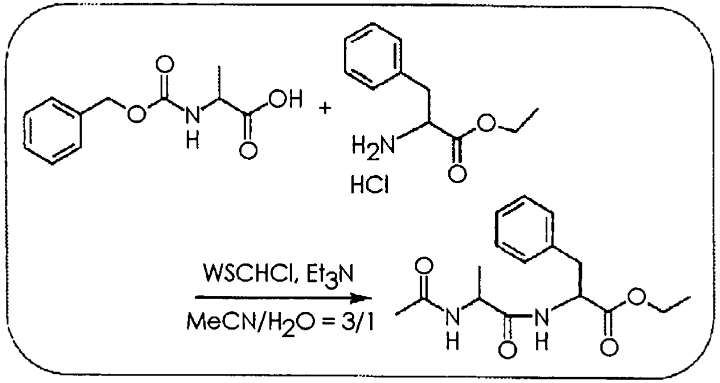


| SYRINGE FLOW RATE | REACTION FLOW RATE | YIELD RATE (TEST 1) | YIELD RATE (TEST 2) |
|---|---|---|---|
| 0.001 | 0.002 | 29.156 | 21.952 |
| 0.003 | 0.006 | 43.015 | 39.288 |
| 0.007 | 0.014 | 51.273 | 43.325 |
| 0.015 | 0.030 | 53.907 | 53.037 |
| 0.050 | 0.100 | 28.918 | 23.07 |
| 0.082 | 0.164 | | 20.772 |
| 0.124 | 0.248 | 25.523 | 23.366 |
| 0.175 | 0.350 | 18.807 | 15.705 |
| 0.240 | 0.480 | 18.712 | 18.279 |
| 0.480 | 0.960 | 14.042 | 12.882 |

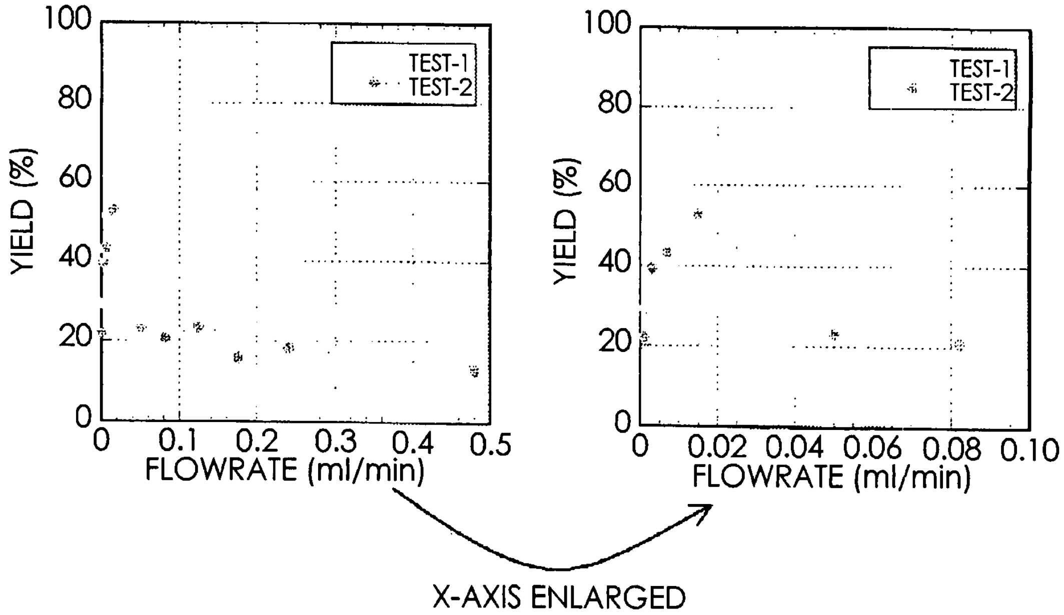

[Figure 19]

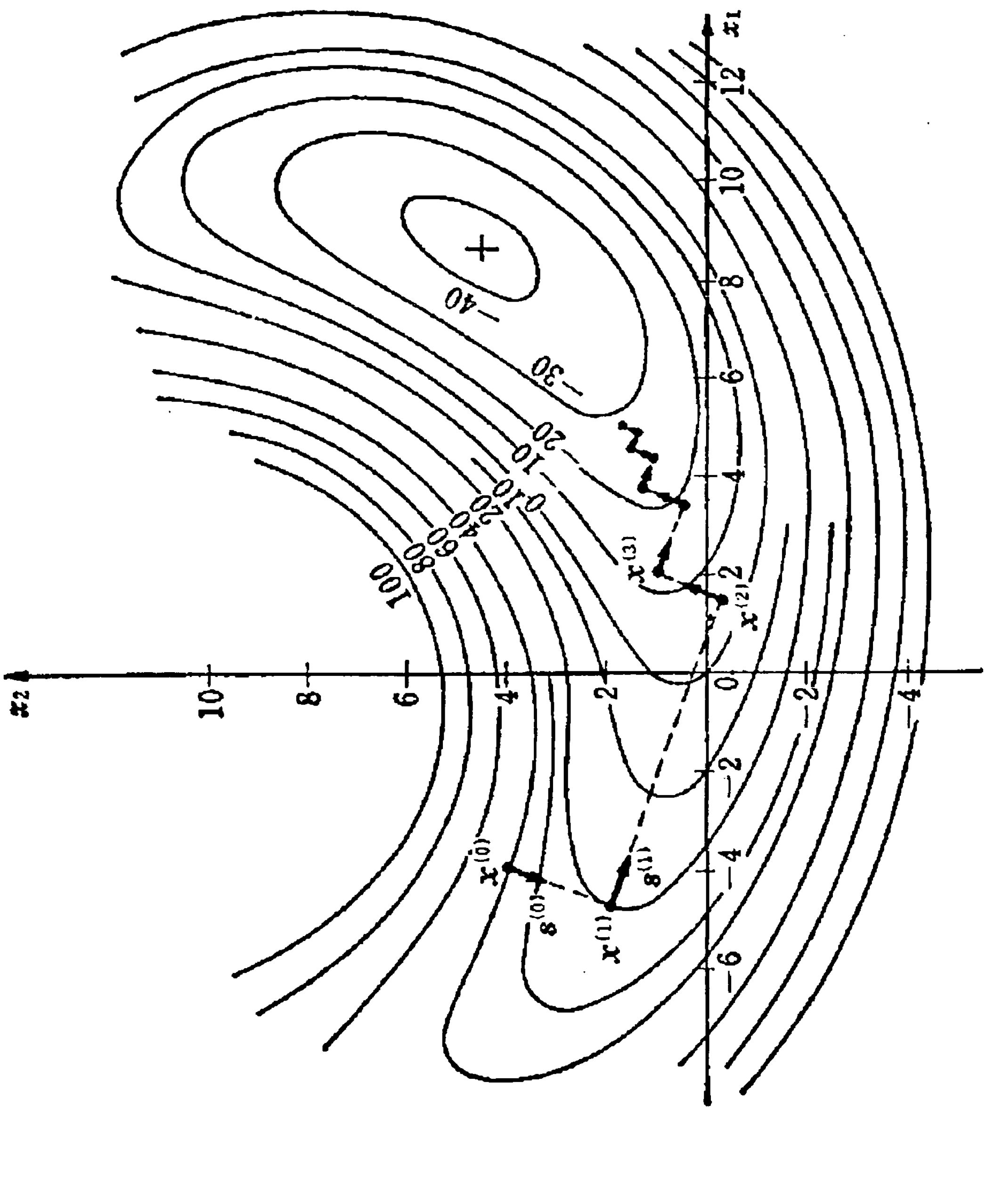
x1
x2
12
10
8
6
4
2
0
-2
-4
-6
−40
−30
−20
−10
0
10
20
40
60
80
100
x(0)
x(1)
x(2)
x(3)
s(0)
s(1)

[Figure 20]

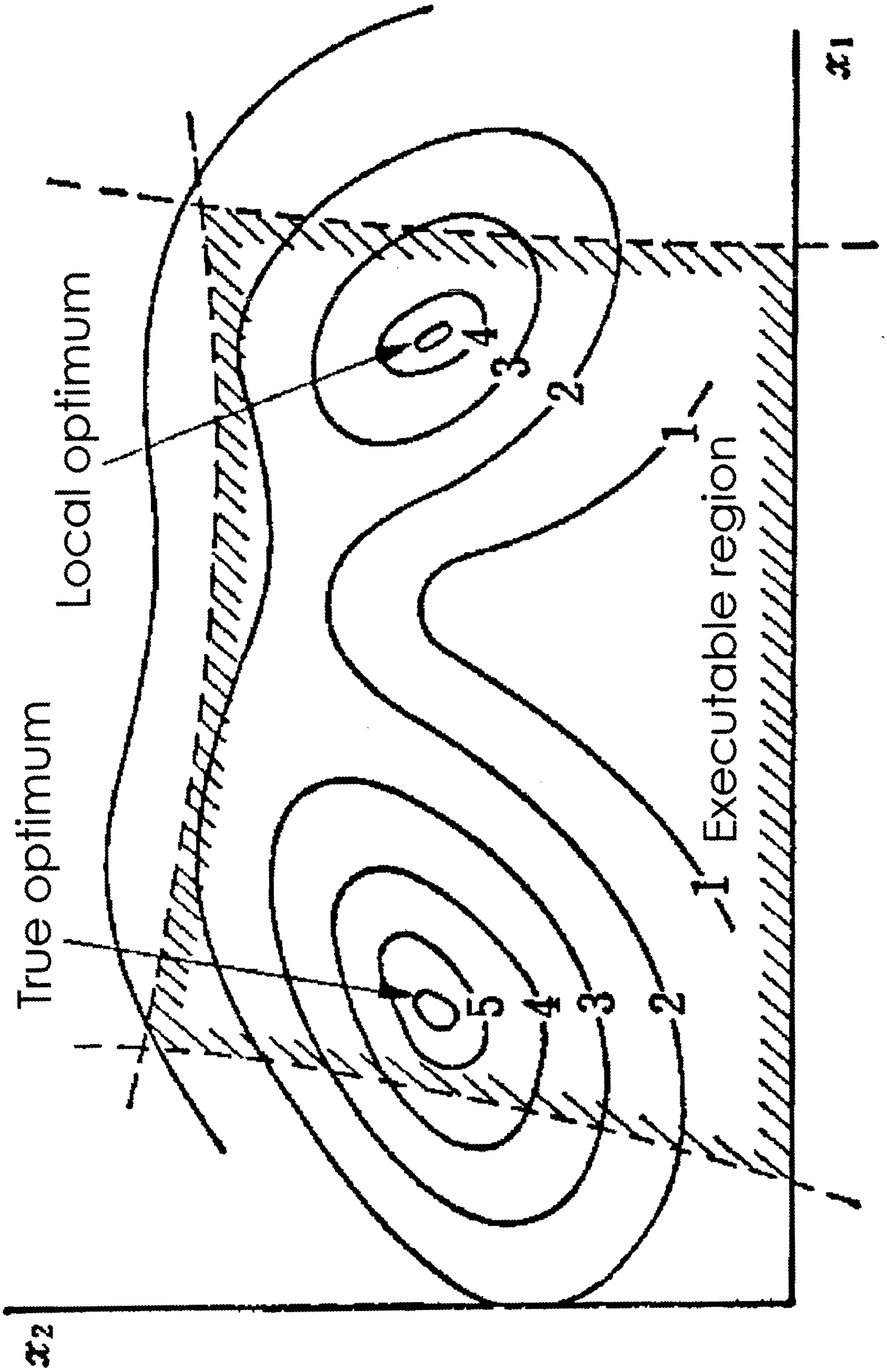
Local optimum
True optimum
Executable region
$x_1$
$x_2$
1
1
2
2
3
3
4
4
5

[Figure 21]

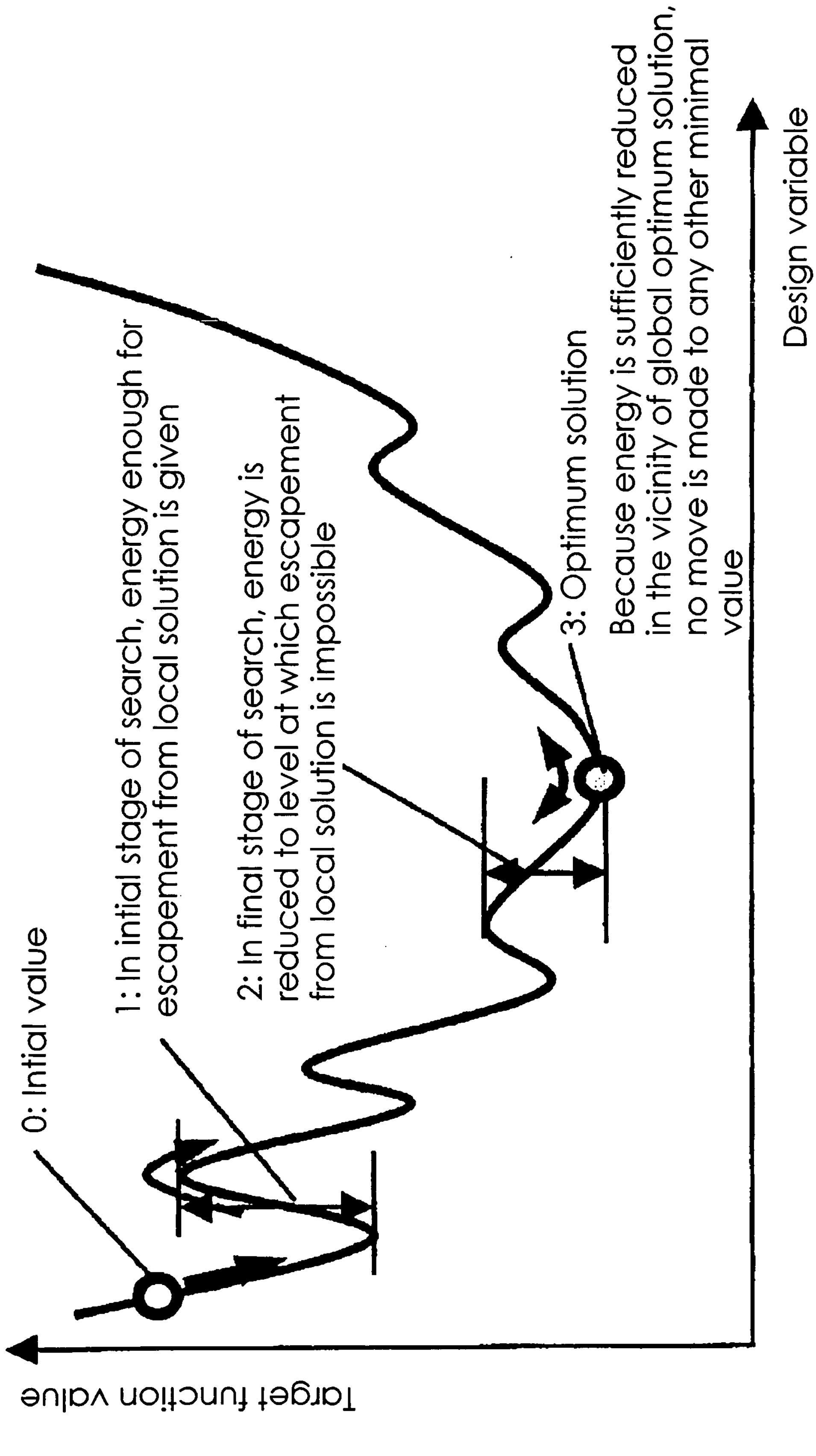
0: Intial value
1: In intial stage of search, energy enough for escapement from local solution is given
2: In final stage of search, energy is reduced to level at which escapement from local solution is impossible
3: Optimum solution
Because energy is sufficiently reduced in the vicinity of global optimum solution, no move is made to any other minimal value
Design variable
Target function value

## INTERNATIONAL SEARCH REPORT

International application No.
PCT/JP2005/013078

A. CLASSIFICATION OF SUBJECT MATTER
*G01N35/08* (2006.01), *G01N37/00* (2006.01)

According to International Patent Classification (IPC) or to both national classification and IPC

B. FIELDS SEARCHED

Minimum documentation searched (classification system followed by classification symbols)
*G01N35/00-35/10* (2006.01), *G01N37/00* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JOIS(JICST FILE)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 2001-228159 A (Seiko Epson Corp.),<br>24 August, 2001 (24.08.01),<br>Full text; all drawings<br>(Family: none) | 1,2,4-6,22,<br>23<br>3,7,8,10-21<br>9 |
| Y | WO 2003/093835 A1 (Arkray, Inc.),<br>13 November, 2003 (13.11.03),<br>Full text; all drawings<br>& EP 1500936 A1 | 3,7,16-21 |
| Y | JP 2003-502656 A (TECAN TRADING AG.),<br>21 January, 2003 (21.01.03),<br>Full text; all drawings<br>& WO 2000/078455 A1 & EP 1192006 A<br>& US 6706519 B1 | 3,7 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 October, 2005 (20.10.05) | 01 November, 2005 (01.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/013078

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-515204 A (Caliper Technologies Corp.), 18 September, 2001 (18.09.01), Full text; all drawings & WO 1999/012016 A1 & US 5965410 A1 & EP 1009995 A | 3,7 |
| Y<br>A | JP 2003-130883 A (Tosoh Corp.), 08 May, 2003 (08.05.03), Full text; all drawings & US 2002/0150503 A1 & EP 1520620 A | 8,10-15,21<br>9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003043052 A